# EUROPÄISCHE PATENTSCHRIFT

(11) **EP 1 919 961 B1**
(45) Veröffentlichungstag und Bekanntmachung des Hinweises auf die Patenterteilung: **04.06.2014**
(21) Anmeldenummer: 06792693.1
(22) Anmeldetag: 04.08.2006
(51) Int. Cl.: C08F 2/38, C08F 293/00, C08F 220/68, C10M 145/14

(54) **ÖLLÖSLICHE POLYMERE**
OIL SOLUBLE POLYMERS
POLYMERES OLEOSOLUBLES

(30) Priorität: 31.08.2005 DE 102005041528
(43) Veröffentlichungstag der Anmeldung: 14.05.2008
(73) Patentinhaber: Evonik Oil Additives GmbH, 64293 Darmstadt (DE)
(72) Erfinder: STÖHR, Torsten, 60326 Frankfurt (DE); MÜLLER, Michael, 64625 Bensheim (DE); EISENBERG, Boris, 64646 Heppenheim-Scheuerberg (DE); BECKER, Harald, 95447 Bayreuth (DE); MÜLLER, Axel, 65193 Wiesbaden (DE)
(86) Internationale Anmeldenummer: PCT/EP2006/065060
(87) Internationale Veröffentlichungsnummer: WO 2007/025837

(56) Entgegenhaltungen:
- EP-A2- 1 433 799
- WO-A-00/24795
- WO-A-96/23012
- WO-A2-2006/047398
- US-A- 5 955 405

## Beschreibung

Die vorliegende Anmeldung betrifft öllösliche Polymere, Verfahren zu deren Herstellung sowie deren Verwendung

Polyalkyl(meth)acrylate (PA(M)A) - im allgemeinen synthetisiert durch konventionelle radikalische Copolymerisation eines Gemisches verschiedener Alkyl(meth)acrylate (A(M)A) - bewirken als Öladditive in Abhängigkeit von Molekulargewicht und Zusammensetzung eine Anhebung des Viskositätsindex (*viscosity index* VI) gepaart mit im Vergleich zu anderen Viskositätsindexverbesseren (*viscosity index improver* VII) hervorragenden Tieftemperatureigenschaften (R.M. Mortier, S.T. Orszulik eds., Chemistry and Technology of Lubricants, Blackie Academic & Professional, 1st ed., London 1993, 124-159 & 165-167). Grundvorrausetzung für die Anwendbarkeit als Öladditive ist trivialerweise die Öllöslichkeit des Polymeren, die im Falle der PA(M)A auf der Anwesenheit einer ausreichend großen Anzahl an Alkylseitenketten mit typischerweise 7-30 Kohlenstoffatomen beruht.

Zur weiteren Anhebung des VI von PA(M)A geht man häufig dazu über, kurzkettige Alkyl(meth)acrylate zu copolymerisieren, wie z.B. Methyl(meth)acrylat oder Butyl(meth)acrylat (EP 0 637 332, The Lubrizol Corporation). Die mit derartigen PA(M)A erreichbaren VI liegen abhängig von Konzentration, permanentem Scherstabilitäts-Index (PSSI) und Grundöltyp meist im Bereich zwischen 150 und 250.

Zusätzliche Funktionalität bezüglich der Dispergierwirkung von Ruß und Schmutzpartikeln wird durch die Copolymerisation von Stickstoff- und/oder Sauerstoff-haltigen Monomeren wie dem Dimethylaminoethyl(meth)acrylat (US 2,737,496, E.I. du Pont de Nemours and Company) oder dem Dimethylaminopropyl(meth)acrylamid (US 4,021,357, Texaco Inc.) erreicht.

Die Viskositäten von Polymerlösungen in Mineralölen oder synthetischen Ölen sind in hohem Maße vom Molekulargewicht abhängig. Dies hat auch zur Folge, dass mit steigendem Molekulargewicht die Temperaturabhängigkeit der Viskosität abnimmt bzw. der VI zunimmt (J. Bartz, Additive für Schmierstoffe, Expert-Verlag, Renningen-Malmsheim 1994, 197-252). Im Zusammenhang mit der Temperaturerhöhung wird auch von einer Entknäuelung des kollabierten Knäuels zum ausgedehnten wurmartigen Molekül gesprochen.

Parallel mit dem Molekulargewicht nimmt die Scherstabilität durch Kettenbruch unter hohem Schergefälle jedoch ab. Als Folge dieses gegenläufigen Effektes sind scherstabile VII wie sie für manuelle Getriebe-, Automatikgetriebe-, Hydraulik- oder Motorenöle gefragt sind, auf Basis konventioneller Polymertypen wie den PA(M)A nur mit hohen Zusatzmengen realisierbar. VII mit niedrigem Viskositätsbeitrag bei tiefen Temperaturen, normaler Verdickung im VI-Bereich von 40 bis 100°C, hohem Viskositätsbeitrag oberhalb von 100°C und gleichzeitig gewährleisteter guter Öllöslichkeit im gesamten Temperaturbereich sind somit von besonderem Interesse.

Eine weitere Klasse der kommerziellen VII ist mit hydrierten Styrol-Dien-Copolymeren gegeben. Eine besondere Ausführung dieser Copolymere ist ein Sternpolymer aus hydrierten Polyisoprenarmen und einem Divinylbenzolvernetzten Polystyrol kern (US 4,116,917, Shell Oil Company). Es hat sich gezeigt, dass sternförmige Polymere sich vorteilhaft auf die Relationen der voneinander abhängigen Größen Verdickungswirkung, VI und Scherstabilität auswirken (SAE Technical Paper Series 982638, 14-30).

Es gibt verschiedenste Ansätze, Sternpolymere auf Basis von PA(M)A herzustellen. So kann das zur Molekulargewichtskontrolle einer konventionellen radikalischen Polymerisation genutzte Mercaptan z.B. in Form eines Pentaerithritol-Derivats eingesetzt werden, welches über vier Thiolfunktionalitäten verfügt. In den Beispielen der WO 00/29495 (Ineos Acrylics UK Ltd.) ist nach eben diesem Verfahren die Synthese von Poly(isobutylmethacrylat)-Sternen dargestellt. Bei derartigen Sternpolymeren sind die Arme jedoch über Thioetherbrücken gebunden, welche bekanntermaßen äußerst oxidationsinstabil sind und daher in Anwendungen z.B. als Öladditiv keine Verwendung finden können. Auch erlaubt die hierbei genutzte konventionelle radikalische Polymerisation nicht die Herstellung von Sternpolymeren mit Blockstrukturen.

Die meisten Ansätze zur Herstellung von PAMA-Sternpolymeren nutzen "kontrollierte Polymerisationen". Kontrollierte Polymerisationsverfahren zeichnen sich durch die Möglichkeit aus, das gewünschte Molekulargewicht unter enger Molekulargewichtsverteilung gezielt einzustellen und erlauben durch Wechsel der Monomerquelle während der Polymerisation die Herstellung von Blockcopolymeren.

Ein Ansatz besteht somit in der Synthese über GTP (*group transfer polymerization*), einem Verfahren zur kontrollierten Polymerisation. So beschreiben die Beispiele der US 4,794,144 (E.I. du Pont de Nemours and Company) die Synthese von Sternpolymeren auf Basis von Poly(methylmethacrylat) und Poly(2-ethylhexylmethacrylat). Hierbei werden gleichermaßen sowohl Synthesewege, bei denen zuerst die Arme ausgehend von monofunktionellen Silylketenacetalen synthetisiert und selbige dann mit difunktionellen Monomeren *in situ* vernetzt werden (*arm first*), als auch Synthesewege mit umgekehrter Reihenfolge genutzt (*core first*). In beiden Fällen entsteht ein Stern aus einem vernetzten Kern mit einer undefinierten Zahl an Armen.

Auch die anionische Polymerisation ist ein Verfahren zur kontrollierten Polymerisation und kann zur Herstellung von Sternen genutzt werden. Hierbei werden - ähnlich wie bei der GTP - zu Beginn zunächst die Arme ausgehend von monofunktionellen Lithiumorganylen polymerisiert (*arm first*) und anschließend die Arme mit difunktionellen Monomeren zu einem Kern vernetzt. So lehrt die WO 96/23012 (Texaco Development Corporation) die Synthese von C1-C18-PA(M)A-Sternen, wohingegen die EP 0 936 225 (Ethyl Corporation) einen kontinuierlichen Prozess zu Herstellung ebendieser C1-C18-PA(M)A-Sterne nutzt. Auch hier entsteht eine undefinierte Zahl an Armen. In beiden Anmeldungen finden die PA(M)A-Sterne Anwendung als Additive für Schmierölformulierungen.

Seit der Mitte bis Ende der 1990er Jahre sind die Methoden der kontrollierten radikalischen Polymerization wie der ATRP (*atom transferradical polymerization,* Basisanmeldung WO 96/30421, Carnegie-Mellon University), RAFT (*reversible addition fragmentation chain transfer polymerization,* Basisanmeldung WO 98/01478, E.I. du Pont de Nemours and Company) oder NMP (*nitroxide mediated polymerization,* Basisanmeldung US 4581429, Commonwealth Scientific and Industrial Research Organization) bekannt. Einen ausgezeichneten Überblick zu diesen Methoden gibt: K. Matyjaszewski, T. P. Davis, Handbook of Radical Polymerization, Wiley Interscience, Hoboken 2002. Derartige Methoden der kontrollierten Radikalik erlauben nun über *core first* Synthesewege die Herstellung von Sternpolymeren mit einer definierten Armzahl, da - im Gegensatz zur GTP oder Anionik - hier auf einfachen Synthesewegen multifunktionelle Initiatoren dargestellt werden können und diese - im Gegensatz zur GTP und Anionik - nicht in einem wasserfreien System polymerisiert werden müssen. Der Umweg über künstliche Kerne aus vernetzten difunktionellen Monomeren ist nicht vonnöten.

Insbesondere die ATRP erlaubt es, nach Initiierung durch leicht zugängliche multifunktionelle Alkylhalogenide Sternpolymere auf Basis von vinylischen Monomeren mit definierter Armzahl im Bereich 3 bis 21 zu erzeugen. Für derartige ATRP-Synthesen wurden bereits tris(Bromomethyl)mesitylen, tetrakis(Bromoemethly)benzol, hexakis(Bromomethyl)benzol, Phenol-, Cyclotetrasiloxan-, Cyclophosphazen-, Calixaren- und Cyclodextrinderivate als geeignete Inititiatoren beschrieben (K. Matyjaszewski, T. P. Davis, Handbook of Radical Polymerization, Wiley Interscience, Hoboken 2002, 820-825).

Auch ATRP-Sterne über Zucker-basierte Initiatoren, z.B. auf Basis von Glucose und Saccharose, wurden bereits beschrieben (M. H. Stenzel-Rosenbaum, T. P. Davis, V. Chen, A. Fane, *Macromolecules* 34 (2001), 5433).

Weiterhin beschreibt die EP 1 244 716 (RohMax Additives GmbH) ATRP-Verfahren zur. Herstellung von engverteiltem PA(M)A, welches optional mit Stickstoff- oder Sauerstoff-funktionellen Monomeren, copolymerisiert ist, in Gegenwart von Mineralöl zur Verwendung als Schmieröladditiv.

Die WO 01/40339 (RohMax Additives GmbH) beansprucht gezielt Blockcopolymere über ATRP bestehend aus PA(M)A und z.B. Stickstoff- oder Sauerstoff-funktionellen Monomeren zur Verwendung als Schmieröladditiv. Noch spezieller beschreibt die WO 04/087850 (RohMax Additives GmbH) Schmierölformulierungen von ausgezeichneten Reibeigenschaften, welche z.B. durch ATRP hergestellte PA(M)A-Blockcopolymere mit Stickstoff- oder Sauerstoff-funktionellen Comonomeren als Reibveränderer (*friction modifier*) beinhalten.

Im Besonderen lehrt die WO 03/095512 (Ciba Specialty Chemicals Holding) Copolymere über ATRP bestehend u.a. aus PA(M)A und Stickstoff- oder Sauerstoff-funktionellen Monomeren sowie einer endständigen Antioxidanz-, Metalldesaktivator-, Antiverschleiß-, Extremdruck- oder Korrosioninhibitor-Funktionälität zur Verwendung als Schmieröladditiv.

Letztlich sei angemerkt, dass in einem gänzlich anderen Gebiet der polymeren Additive kosmetische Formulierungen auf Basis von Wasser und Öl, welche ATRP-Sternpolymere auf Basis von PA(M)A enthalten, in den EP 1 043 343 bis 1 043 347 (L'Oréal) geschützt werden.

Die zuvor dargelegten Polymere werden vielfach kommerziell eingesetzt. Dementsprechend zeigen die meisten dieser Polymere ein befriedigendes Eigenschaftsprofil. Allerdings besteht ein dauerhaftes Bestreben, die Relationen von Verdickungswirkung, Scherstabilität und VI zu verbessern, um bei möglichst geringem Einsatz an Additiv in Schmierölen - unter Vermeidung von vorzeitigem Scherabbau der Polymere - über einen weiten Temperaturbereich eine gewünschte Viskosität zu erzielen.

Des weiteren sollten die Polymere einfach und kostengünstig hergestellt werden können, wobei insbesondere kommerziell erhältliche Komponenten eingesetzt werden sollten. Hierbei sollte die Produktion großtechnisch erfolgen können, ohne dass hierzu neue oder konstruktiv aufwendige Anlagen benötigt werden.

Gelöst werden diese sowie weitere nicht explizit genannten Aufgaben, die jedoch aus den hierin einleitend diskutierten Zusammenhängen ohne weiteres ableitbar oder erschließbar sind, durch Polymere mit allen Merkmalen des Patentanspruchs 1. Zweckmäßige Abwandlungen der erfindungsgemäßen Polymere werden in den auf Anspruch 1 rückbezogenen Unteransprüchen unter Schutz gestellt. Hinsichtlich des Verfahrens zur Herstellung von Polymeren liefert Anspruch 20 eine Lösung der zugrunde liegenden Aufgabe, während Anspruch 23 eine Ölformulierung umfassend die Polymere der vorliegenden Erfindung schützt.

Dadurch, dass ein Sternpolymer 3 bis 21 Arme aufweist und mindestens 3 der Arme mindestens 40 Gew.-%, bezogen auf das Gewicht der Arme, Einheiten umfassen, die von einer oder mehreren ethylenisch ungesättigten Esterverbindungen der Formel (I) 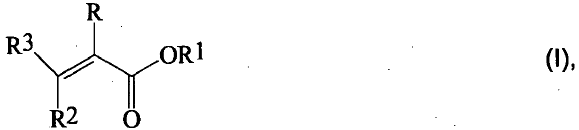 worin R Wasserstoff oder Methyl darstellt, R¹ einen linearen oder verzweigten Alkylrest mit 7 bis 30 Kohlenstoffatomen bedeutet, R² und R³ unabhängig Wasserstoff oder eine Gruppe der Formel -COOR' darstellen, worin R' Wasserstoff oder eine Alkylgruppe mit 7 bis 30 Kohlenstoffatomen bedeutet, abgeleitet sind, gelingt es auf nicht ohne weiteres vorhersehbare Weise Polymer umfassend 50-100 Gew.-%, bezogen auf das Gewicht des Polymeren, Wiederholungseinheiten, die von einer oder mehreren ethylenisch ungesättigten Esterverbindungen der Formel (I) 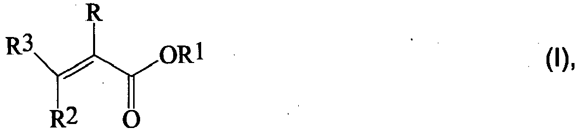 worin R Wasserstoff oder Methyl darstellt, R¹ einen linearen oder verzweigten Alkylrest mit 7 bis 30 Kohlenstoffatomen bedeutet, R² und R³ unabhängig Wasserstoff oder eine Gruppe der Formel -COOR' darstellen, worin R' Wasserstoff oder eine Alkylgruppe mit 7 bis 30 Kohlenstoffatomen bedeutet, abgeleitet sind,
wobei das Polymer durch kontrollierte Polymerisation ausgehend von einem multifunktionellen Initiator hergestellt wird,
wobei die Anzahl der Polymerarme von der Anzahl der Funktionen, die der Initiator aufweist, abhängig ist und das Zentrum höchstens 50, bevorzugt höchstens 25 Kohlenstoffatome aufweist, und
wobei die Polydispersität M_{w}/Mₙ des Sternpolymeren im Bereich von 1,0 bis 2,0 liegt,
zur Verfügung zu stellen, die eine hohe Verdickungswirkung bei einer geringen Scherempfindlichkeit aufweisen.

Zugleich lassen sich durch die erfindungsgemäßen Polymere eine Reihe weiterer Vorteile erzielen. Hierzu gehören unter anderem:
➢ Die Polymere der vorliegenden Erfindung können hervorragende Wirkung zur Verbesserung der Tieftemperatureigenschaften, beispielsweise des Stockpunkts und der Brookfield-Viskositäten bei -26°C oder -40°C, aufweisen.
➢ Polymere gemäß einem besonderen Aspekt der vorliegenden Erfindung können eine ausgezeichnete Wirkung als Reibverbesserer aufweisen.
➢ Weiterhin zeigen bevorzugte Polymere eine hervorragende Dispergierwirkung.
➢ Darüber hinaus weisen die erfindungsgemäßen Polymere eine hervorragende Filtrierbarkeit auf.
➢ Der Viskositätsindex der vorliegenden Polymere kann bedarfsgerecht über einen sehr weiten Bereich eingestellt werden. So können gemäß einem
➢ Aspekt die erfindungsgemäßen Polymere einen überraschend hohen Viskositätsindex aufweisen, wohingegen bevorzugte Polymere gemäß einem weiteren Aspekt einen besonders geringen Viskositätsindex zeigen.
➢ Bevorzugte Polymere der vorliegenden Erfindung weisen eine hervorragende Oxidationsbeständigkeit auf.
➢ Die Polymere der vorliegenden Erfindung können besonders leicht und einfach hergestellt werden. Hierbei können übliche, großtechnische Anlagen eingesetzt werden.

Die erfindungsgemäßen Polymere stellen Sternpolymere dar. Der hierin verwendete Begriff Sternpolymere ist an sich bekannt, wobei diese Polymere ein Zentrum aufweisen, von dem 3 und mehr Ketten ausgehen, die nachfolgend Arme genannt werden. Das Zentrum kann ein einzelnes Atom oder eine Atomgruppe sein.

Die erfindungsgemäßen Sternpolymere weisen 3 bis 21, vorzugsweise 5 bis 15 und besonders bevorzugt 7 bis 12 Arme auf. Die Polymerketten bzw. Arme gehen hierbei von einem Zentrum aus, welches eine Atomgruppe darstellen kann. Die das Zentrum bildende Atomgruppe weist vorzugsweise höchstens 50 Kohlenstoffatome und ganz besonders bevorzugt höchstens 25 Kohlenstoffatome auf.

Die Anzahl der Arme sowie die Anzahl der Kohlenstoffatome des Zentrums ergeben sich vorzugsweise aus dem verwendeten Initiator, wobei die Anzahl der Arme von der Anzahl der Zentren abhängig ist, die der Initiator aufweist, und die Anzahl der Kohlenstoffatome von der Art und des Aufbaus des Initiators abhängig ist. Die Art des Initiators ist von dem Polymerisationsverfahren abhängig.

Mindestens 3, bevorzugt mindestens 5 und ganz besonders bevorzugt mindestens 8 der Arme des erfindungsgemäßen Sternpolymer umfassen mindestens 40 Gew.-%, vorzugsweise mindestens 50 Gew.-% und ganz besonders bevorzugt mindestens 80 Gew.-%, bezogen auf das Gewicht der Arme, Einheiten, die von einer oder mehreren ethylenisch ungesättigten Esterverbindungen der Formel (I) 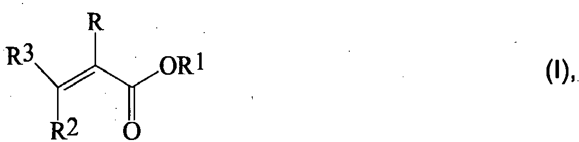 worin R Wasserstoff oder Methyl darstellt, R¹ einen linearen oder verzweigten Alkylrest mit 7 bis 30 Kohlenstoffatomen bedeutet, R² und R³ unabhängig Wasserstoff oder eine Gruppe der Formel -COOR' darstellen, worin R' Wasserstoff oder eine Alkylgruppe mit 7 bis 30 Kohlenstoffatomen bedeutet.

Der Begriff Wiederholungseinheit ist in der Fachwelt weithin bekannt. Die vorliegenden Sternpolymere können ausgehend von multifunktionellen *core first* Initiatoren vorzugsweise über "kontrollierte Polymerisation" erhalten werden, wozu die kontrolliert-radikalischen ATRP-, RAFT- und NMP-Verfahren sowie die anionische und kationische Polymerisation und die GTP zählen, ohne dass hierdurch eine Beschränkung erfolgen soll. Hierbei werden Doppelbindungen unter Bildung von kovalenten Bindungen geöffnet. Dementsprechend ergibt sich die Wiederholungseinheit aus den eingesetzten Monomeren.

Die vorliegende Erfindung beschreibt Polymere, die vorzugsweise eine hohe Öllöslichkeit aufweisen. Der Begriff öllöslich bedeutet, dass eine Mischung von einem Grundöl und einem erfindungsgemäßen Polymer ohne makroskopische Phasenbildung herstellbar ist, die mindestens 0,1 Gew.-%, vorzugsweise mindestens 0,5 Gew.-% der erfindungsgemäßen Polymere aufweist. In dieser Mischung kann das Polymere dispergiert und/oder gelöst vorliegen. Die Öllöslichkeit hängt insbesondere von den Anteilen der lipophilen und lipohoben Monomeren sowie vom Grundöl ab. Diese Eigenschaft ist dem Fachmann bekannt und kann für das jeweilige Grundöl leicht über den Anteil an lipophilen und lipophoben Monomeren eingestellt werden.

Der Begriff "lipophiles Monomer" bezeichnet ethylenisch ungesättigte Verbindungen, deren Homopolymere mit einem Molekulargewicht von 100000 g/mol eine Öllöslichkeit von mindestens 0,1 Gew.-%, vorzugsweise mindestens 0,5 Gew.-% und ganz besonders bevorzugt mindestens 1 Gew.-% bei 0°C in einem paraffinbasischen Mineralöl aufweisen.

Der Begriff "lipophobes Monomer" bezeichnet ethylenisch ungesättigte Verbindungen, deren Homopolymere mit einem Molekulargewicht von 100000 g/mol eine Öllöslichkeit von höchstens 0,1 Gew.-%, vorzugsweise höchstens 0,05 Gew.-% und ganz besonders bevorzugt höchstens 0,01 Gew.-% bei 0°C in einem paraffinbasischen Mineralöl aufweisen.

Die erfindungsgemäßen Polymere umfassen 50-100 Gew.-%, vorzugsweise 55 bis 95 Gew.-%, bezogen auf das Gewicht des Polymeren, Wiederholungseinheiten, die von einer oder mehreren ethylenisch ungesättigten Esterverbindungen der Formel (I) 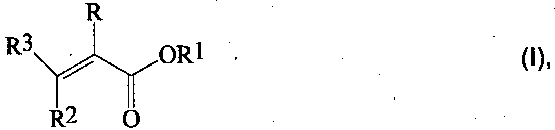 worin R Wasserstoff oder Methyl darstellt, R¹ einen linearen oder verzweigten Alkylrest mit 7 bis 30 Kohlenstoffatomen bedeutet, R² und R³ unabhängig Wasserstoff oder eine Gruppe der Formel -COOR' darstellen, worin R' Wasserstoff oder eine Alkylgruppe mit 7 bis 30 Kohlenstoffatomen bedeutet, abgeleitet sind.

Zu den ethylenisch ungesättigten Esterverbindungen der Formel (I) gehören unter anderem

(Meth)acrylate, Fumarate und Maleate, die sich von gesättigten Alkoholen ableiten, wie 2-Ethylhexyl(meth)acrylat, Heptyl(meth)acrylat, 2-tert.-Butylheptyl(meth)acrylat, Octyl(meth)acrylat, 3-iso-Propylheptyl(meth)acrylat, Nonyl(meth)acrylat, Decyl(meth)acrylat, Undecyl(meth)acrylat, 5-Methylundecyl(meth)acrylat, Dodecyl(meth)acrylat, 2-Methyldodecyl(meth)acrylat, Tridecyl(meth)acrylat, 5-Methyltridecyl(meth)acrylat, Tetradecyl(meth)acrylat, Pentadecyl(meth)acrylat, Hexadecyl(meth)acrylat, 2-Methylhexadecyl(meth)acrylat, Heptadecyl(meth)acrylat, 5-iso-Propylheptadecyl(meth)acrylat, 4-tert.-Butyloctadecyl(meth)acrylat, 5-Ethyloctadecyl(meth)acrylat, 3-iso-Propyloctadecyl(meth)acrylat, Octadecyl(meth)acrylat, Nonadecyl(meth)acrylat, Eicosyl(meth)acrylat, Cetyleicosyl(meth)acrylat, Stearyleicosyl(meth)acrylat, Docosyl(meth)acrylat und/oder Eicosyltetratriacontyl(meth)acrylat; Cycloalkyl(meth)acrylate, wie 2,4,5-Tri-t-butyl-3-Vinylcyclohexyl(meth)acrylat, 2,3,4,5-Tetra-t-butylcyclohexyl(meth)acrylat; (Meth)acrylate, die sich von ungesättigten Alkoholen ableiten, wie z. B. Oleyl(meth)acrylat; Cycloalkyl(meth)acrylate, wie 3-Vinylcyclohexyl(meth)acrylat, Bornyl(meth)acrylat; sowie die entsprechenden Fumarate und Maleate.

Der Ausdruck (Meth)acrylate umfasst Methacrylate und Acrylate sowie Mischungen aus beiden. Diese Monomere sind weithin bekannt. Hierbei kann der Alkylrest linear, cyclisch oder verzweigt sein.

Die Esterverbindungen mit langkettigem Alkoholrest, lassen sich beispielsweise durch Umsetzen von kurzkettigen (Meth)acrylaten, Fumaraten, Maleaten und/oder den entsprechenden Säuren mit langkettigen Fettalkoholen erhalten, wobei im allgemeinen eine Mischung von Estern, wie beispielsweise (Meth)acrylaten mit verschieden langkettigen Alkoholresten entsteht.

Zu diesen Fettalkoholen gehören unter anderem Oxo Alcohol® 7911 und Oxo Alcohol® 7900, Oxo Alcohol® 1100; Alfol® 610, Alfol® 810, Lial® 125 und Nafol®-Typen (Sasol Olefins & Surfactant GmbH); Alphanol® 79 (ICI); Epal® 610 und Epal® 810 (Ethyl Corporation); Linevol® 79, Linevol® 911 und Neodol® 25E (Shell AG); Dehydad®, Hydrenol®- und Lorol®-Typen (Cognis); Acropol® 35 und Exxal® 10 (Exxon Chemicals GmbH); Kalcol® 2465 (Kao Chemicals).

Gemäß einem besonderen Aspekt der vorliegenden Erfindung werden vorzugsweise Mischungen von langkettigen Alkyl(meth)acrylaten gemäß der Formel (I) eingesetzt. Vorzugsweise liegt der Anteil der (Meth)acrylate mit 6 bis 15 Kohlenstoffatomen im Alkoholrest im Bereich von 20 bis 95 Gew.-%, bezogen auf das Gewicht der Monomerenzusammensetzung zur Herstellung der Sternpolymere. Der Anteil der (Meth)acrylate mit 16 bis 30 Kohlenstoffatomen im Alkoholrest liegt vorzugsweise im Bereich von 0,5 bis 60 Gew.-%, bezogen auf das Gewicht der Monomerenzusammensetzung zur Herstellung der Sternpolymere.

Des Weiteren kann das Polymer Wiederholungseinheiten aufweisen, die von weiteren Monomeren abgeleitet sind.

Hierzu gehören insbesondere (Meth)acrylate, Fumarate und Maleate mit einem C₁ bis C₆ Alkylrest.

Beispielsweise kann das Polymer 0,1 bis 40 Gew.-%, vorzugsweise 0,5 bis 30 Gew.-% und besonders bevorzugt 1 bis 20 Gew.-% Wiederholungseinheiten aufweisen, die von einer oder mehreren ethylenisch ungesättigten Esterverbindungen der Formel (II) 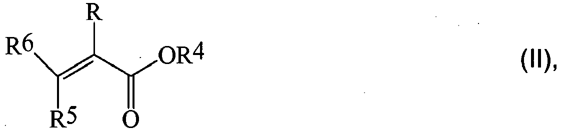 worin R Wasserstoff oder Methyl darstellt, R⁴ einen linearen oder verzweigten Alkylrest mit 1 bis 6 Kohlenstoffatomen bedeutet, R⁵ und R⁶ unabhängig Wasserstoff oder eine Gruppe der Formel -COOR" darstellen, worin R" Wasserstoff oder eine Alkylgruppe mit 1 bis 6 Kohlenstoffatomen bedeutet, abgeleitet sind.

Beispiele für ethylenisch ungesättigten Esterverbindungen der Formel (II) sind unter anderem (Meth)acrylate, Fumarate und Maleate, die sich von gesättigten Alkoholen ableiten, wie Methyl(meth)acrylat, Ethyl(meth)acrylat, n-Propyl(meth)acrylat, iso-Propyl(meth)acrylat, n-Butyl(meth)acrylat, tert-Butyl(meth)acrylat, Pentyl(meth)acrylat und Hexyl(meth)acrylat; Cycloalkyl(meth)acrylate, wie Cyclopentyl(meth)acrylat; (Meth)acrylate, die sich von ungesättigten Alkoholen ableiten, wie 2-Propinyl(meth)acrylat, Allyl(meth)acrylat und Vinyl(meth)acrylat.

Von den ethylenisch ungesättigten Esterverbindungen sind die (Meth)acrylate gegenüber den Maleaten und Fumaraten besonders bevorzugt, d.h. R², R³, R⁵ und R⁶ der Formeln (I) und (II) stellen in besonders bevorzugten Ausführungsformen Wasserstoff dar. Im allgemeinen sind die Methacrylate den Acrylaten bevorzugt.

Optional kann das erfindungsgemäße Polymer bis 30 Gew.-%, bevorzugt bis zu 20 Gew.-%, noch bevorzugter bis zu 10 Gew.-% an Wiederholungseinheiten aufweisen, die von dispergierenden sauerstoff- und/oder stickstoff-funktionalisierten Monomeren (III) abgeleitet sind, wobei das dispergierende sauerstoff- und/oder stickstoff-funktionalisierte Monomer ein dispergierendes (Meth)acrylat oder (Meth)acrylamid darstellt, welches aus einem Alkohol R⁷-OH oder Amin R⁷-NR⁸-H dargestellt wurde, wobei R⁷ unabhängig eine höchstens 10 Kohlenstoffatome umfassende Gruppe mit mindestens einem Heteroatom und worin R⁸ unabhängig Wasserstoff oder eine Gruppe mit 1 bis 20 Kohlenstoffatomen darstellen.

R⁷ umfasst Heteroatom-haltige aromatische Gruppen sowie Heteroatom-haltige aliphatische Alkyl- und Cycloalkylgruppen sowie Alkoxy-, Cycloalkoxy-, Alkanoyl-, Alkoxycarbonylgruppen.

Erfindungsgemäß bezeichnen aromatische Gruppen Reste ein- oder mehrkerniger aromatischer Verbindungen mit vorzugsweise 6 bis 20, insbesondere 6 bis 12 Kohlenstoffatomen. Bevorzugte aromatische Gruppen leiten sich ab von Benzol, Naphthalin, Biphenyl, Diphenylether, Diphenylmethan, Diphenyldimethylmethan, Bisphenon, Furan, Pyrrol, Oxazol, Imidazol, Isoxazol, Pyrazol, 1,3,4-Oxadiazol, 2,5-Diphenyl-1,3,4-oxadiazol, 1,3,4-Triazol, 2,5-Diphenyl-1,3,4-triazol, 1,2,5-Triphenyl-1,3,4-triazol, 1,2,4-Oxadiazol, 1,2,4-Triazol, 1,2,3-Triazol, 1,2,3,4-Tetrazol, Benzo[b]furan, Indol, Benzo[c]furan, Isoindol, Benzoxazol, Benzimidazol, Benzisoxazol, Benzopyrazol, Benzotriazol, Dibenzofuran, Carbazol, Pyridin, Bipyridin, Pyrazin, Pyrazol, Pyrimidin, Pyridazin, 1,3,5-Triazin, 1,2,4-Triazin, 1,2,4,5-Triazin, Tetrazin, Chinolin, Isochinolin, Chinoxalin, Chinazolin, Cinnolin, 1,8-Naphthyridin, 1,5-Naphthyridin, 1,6-Naphthyridin, 1,7-Naphthyridin, Phthalazin, Pyridopyrimidin, Purin, Pteridin oder Chinolizin, 4H-Chinolizin, Diphenylether, Anthracen, Benzopyrrol, Benzooxadiazol, Benzopyridin, Benzopyrazin, Benzopyrazidin, Benzopyrimidin, Benzotriazin, Indolizin, Pyridopyridin, Imidazopyrimidin, Pyrazinopyrimidin, Carbazol, Aciridin, Phenazin, Benzochinolin, Phenoxazin, Acridizin, Benzopteridin, Phenanthrolin und Phenanthren.

Zu den bevorzugten Alkylgruppen gehören die Methyl-, Ethyl-, Propyl-, Isopropyl-, 1-Butyl-, 2-Butyl-, 2-Methylpropyl-, tert.-Butylrest, Pentyl-, 2-Methylbutyl-, 1,1-Dimethylpropyl-, Hexyl-, Heptyl-, Octyl-, 1,1,3,3-Tetramethylbutyl, Nonyl-, 1-Decyl-, 2-Decyl-, Undecyl-, Dodecyl-, Pentadecyl- und die Eicosyl-Gruppe.

Zu den bevorzugten Cycloalkylgruppen gehören die Cyclopropyl-, Cyclobutyl-, Cyclopentyl-, Cyclohexyl-, Cycloheptyl- und die Cyclooctyl-Gruppe.

Zu den bevorzugten Alkoxygruppen gehören Alkoxygruppen, deren Kohlenwasserstoffrest eine der vorstehend genannten bevorzugten Alkylgruppen ist.

Zu den bevorzugten Cycloalkoxygruppen gehören Cycloalkoxygruppen, deren Kohlenwasserstoffrest eine der vorstehend genannten bevorzugten Cycloalkylgruppen ist.

Zu den bevorzugten Alkanoylgruppen gehören die Formyl-, Acetyl-, Propionyl-, 2-Methylpropionyl-, Butyryl-, Valeroyl-, Pivaloyl-, Hexanoyl-, Decanoyl- und die Dodecanoyl-Gruppe.

Zu den bevorzugten Alkoxycarbonylgruppen gehören die Methoxycarbonyl-, Ethoxycarbonyl-, Propoxycarbonyl-, Butoxycarbonyl-, tert.-ButoxycarbonylGruppe, Hexyloxycarbonyl-, 2-Methylhexyloxycarbonyl-, Decyloxycarbonyl- oder Dodecyloxycarbonyl-Gruppe.

Die genannten Gruppen R⁷ können weitere Substituenten aufweisen wie lineare oder verzweigte Alkylgruppen mit 1 bis 6 Köhlenstoffatome, wie beispielsweise Methyl, Ethyl, Propyl, Butyl, Pentyl, 2-Methylbutyl oder Hexyl; Cycloalkylgruppen, wie beispielsweise Cyclopentyl und Cyclohexyl; oder auch Halogenide.

Zu den bevorzugten Heteroatomen in der Gruppe R⁷ gehören neben Sauerstoff und Stickstoff auch Schwefel, Bor, Silicium und Phosphor. Das Heteroatom kann bevorzugt in Form einer Alkohol-, Ether-, Ester, Amino- oder amidgruppe vorliegen.

Gemäß einer besonderen Ausführungsform der vorliegenden Erfindung weist der Rest R⁷ mindestens eine Gruppe der Formel -OR⁸ oder -NR⁸R⁸ auf, worin R⁸ unabhängig Wasserstoff oder eine Gruppe mit 1 bis 20 Kohlenstoffatomen umfasst.

Das Zahlenverhältnis von Heteroatomen zu Kohlenstoffatomen im Rest R⁷ kann in weiten Bereichen liegen. Vorzugsweise liegt dieses Verhältnis im Bereich von 1:1 bis 1:10, insbesondere 1:1 bis 1:5 und besonders bevorzugt 1:2 bis 1:4.

Zu den Wiederholungseinheiten, die von dispergierenden sauerstoff- und/oder stickstoff-funktionalisierten Monomeren (III) abgeleitet sind, gehören insbesondere Wiederholungseinheiten, die von Aminoalkyl(meth)acrylaten abgeleitet sind, wie
N,N-Dimethylaminoethyl(meth)acrylat (DMAE(M)A),
N,N-Dimethylaminopropyl(meth)acrylat,
N,N-Diethylaminopentyl(meth)acrylat,
N,N-Dibutylaminohexadecyl(meth)acrylat.

Dazu gehören auch insbesondere Wiederholungseinheiten, die von Aminoalkyl(meth)acrylamiden abgeleitet sind, wie N,N-Dimethylaminopropyl(meth)acrylamid (DMAP(M)AAm).

Dazu gehören auch insbesondere Wiederholungseinheiten, die von Hydroxylalkyl(meth)acrylaten abeleitet sind, wie
3-Hydroxypropyl(meth)acrylat,
3,4-Dihydroxybutyl(meth)acrylat,
2-Hydroxyethyl(meth)acrylat (HE(M)A),
2-Hydroxypropyl(meth)acrylat,
2,5-Dimethyl-1,6-hexandiol(meth)acrylat,
1,10-Decandiol(meth)acrylat.

Dazu gehören auch insbesondere Wiederholungseinheiten, die von heterocyclischen (Meth)acrylaten abgeleitet sind, wie 2-(1-Imidazolyl)ethyl(meth)acrylat
2-(4-Morpholinyl)ethyl(meth)acrylat
1-(2-Methacryloyloxyethyl)-2-pyrrolidon,
N-Methacryloylmorpholin,
N-Methacryloyl-2-pyrrolidinon,
N-(2-Methacryloyloxyethyl)-2-pyrrolidinon,
N-(3-Methacryloyloxypropyl)-2-pyrrolidinon.

Dazu gehören auch insbesondere Wiederholungseinheiten, die von Nitrilen der (Meth)acrylsäure und anderen stickstoffhaltigen Methacrylaten abgeleitet sind, wie
N-(Methacryloyloxyethyl)düsobutylketimin,
N-(Methacryloyloxyethyl)dihexadecylketimin,
Methacryloylamidoacetonitril,
2-Methacryloyloxyethylmethylcyanamid,
Cyanomethylmethacrylat.

Zu den Wiederholungseinheiten, die von dispergierenden sauerstoff- und/oder stickstoff-funktionalisierten Monomeren (III) abgeleitet sind, gehören auch Wiederholungseinheiten, die von heterocyclischen Vinylverbindungen abgeleitet sind wie 2-Vinylpyridin, 4-Vinylpyridin, 2-Methyl-5-vinylpyridin, 3-Ethyl-4-vinylpyridin, 2,3-Dimethyl-5-vinylpyridin, Vinylpyrimidin, Vinylpiperidin, 9-Vinylcarbazol, 3-Vinylcarbazol, 4-Vinylcarbazol, 1-Vinylimidazol, 2-Methyl-1-vinylimidazol, N-Vinylpyrrolidon, N-Vinylpyrrolidin, 3-Vinylpyrrolidin, N-Vinylcaprofacfam, N-Vinylbutyrolactam, Vinyloxolan, Vinylfuran, Vinyloxazole und hydrierte Vinyloxazole.

Darüber hinaus kann das Polymer Wiederholungseinheiten von weiteren Comonomeren (IV) aufweisen, die nicht zu den Gruppen (I), (II) oder (III) gehören, insbesondere
- von Styrolmonomeren wie Styrol; substituierten Styrolen mit einem Alkylsubstituenten in der Seitenkette wie α-Methylstyrol und α-Ethylstyrol; substituierten Styrolen mit einem Alkylsubstitutenten am Ring wie Vinyltoluol und p-Methylstyrol; halogenierten Styrolen wie beispielsweise Monochlorstyrol, Dichlorstyrol, Tribromstyrol und Tetrabromstyrol,
- von Vinylestern wie Vinylacetat und Vinylpropionat, oder
- von Vinylhalogeniden wie Vinylchlorid, Vinylfluorid, Vinylidenchlorid und Vinylidenfluorid.

Alle zuvor genannten ethylenisch ungesättigten Monomere können einzeln oder als Mischungen eingesetzt werden. Es ist des Weiteren möglich, die Monomerzusammensetzung während der Polymerisation der Arme der Polymere zu variieren, um definierte Strukturen, wie beispielsweise Blockcopolymere oder Gradientcopolymere, zu erhalten.

Das Sternpolymer der vorliegenden Erfindung weist vorzugsweise ein Gewichtsmittel des Molekulargewichts M_{w} im Bereich von 25000 g/mol bis 150000 g/mol und ganz besonders bevorzugt 30000 g/mol bis 90000 g/mol auf und eine Polydispersität M_{w}/Mₙ im Bereich von 1,0 bis 1,3.

Das Gewichtsmittel des Molekulargewichts M_{w} sowie das Zahlenmittel des Molekulargewichts Mₙ kann durch GPC bestimmt werden, wobei sich die Polydispersität M_{w}/Mₙ als Quotient dieser Werte ergibt. Hierbei handelt es sich um apparente Werte, deren Bestimmung allgemein bekannt ist.

Beispielsweise kann die Messung in Tetrahydrofuran bei 35°C gegen eine Polymethylmethacrylat-Eichkurve aus einem Satz von ≥25 Standards (Polymer Standards Service bzw. Polymer Laboratories), deren Mₚₑₐₖ logarhythmisch gleichmäßig über den Bereich von 5·10⁶ bis 2·10² g/mol verteilt liegt, erfolgen. Hierbei können Kombinationen von sechs Säulen (Polymer Standards Service SDV 100Å / 2x SDV LXL / 2x SDV 100Å / Shodex KF-800D) verwendet werden.

Bevorzugte Polymere der vorliegenden Erfindung zeigen eine hervorragende Filtrierbarkeit.

Vorzugsweise weisen die Polymeren eine Filtrierbarkeit von mindestens 90% und ganz besonders bevorzugt mindestens 95%, bezogen auf eine projizierte Filtrierbarkeit unter Stufe 1 der ISO 13357-2 (5µm-Filter) auf.

Gemäß einem besonderen Aspekt der vorliegenden Erfindung können die Wiederholungseinheiten in Form von Blöcken und Segmenten vorliegen.

Vorzugsweise kann das Sternpolymer mindestens zwei Blöcke in mindestens einem, vorzugsweise in mehreren und ganz besonders bevorzugt in allen Armen aufweisen. Blöcke weisen eine konstante Zusammensetzung aus einem oder mehreren Monomerbausteinen auf.

Die Monomere der Gruppe (I) stellen die ethylenisch ungesättigten Esterverbindungen der Formel (I) dar. Die Monomere der Gruppe (II) stellen die ethylenisch ungesättigten Esterverbindungen der Formel (II) dar. Die Monomere der Gruppe (III) entsprechen den zuvor dargelegten dispergierenden sauerstoff- und/oder stickstoff-funktionalisierten Monomeren. Die Monomere der Gruppe (IV) entsprechen den zuvor dargelegten weiteren Comonomeren.

Monomere der Gruppe (I) sind vorzugsweise lipophil. Monomere der Gruppen (I), (II) und (III) sind vorzugsweise lipophob.

Vorzugsweise weist das Sternpolymer mindestens einen lipophilen Block, umfassend einen hohen Anteil an Wiederholungseinheiten abgeleitet von Monomeren der Formel (I), und mindestens einen lipophoben Block auf, umfassend einen hohen Anteil an Wiederholungseinheiten abgeleitet von Monomeren der Gruppen (II), (III) und/oder (IV) auf.

Gemäß einem besonderen Aspekt kann ein Block, der reich an lipophobem Monomeren der Gruppen (II), (III) und/oder (IV) ist, mindestens 50 Gew.-%, besonders bevorzugt mindestens 70 Gew.-%, bezogen auf das Gewicht des Blocks, an Wiederholungseinheiten aufweisen, die von einer oder mehreren ethylenisch ungesättigten Monomeren der Gruppen (II), (III) und/oder (IV) abgeleitet sind.

Ist der zuvor dargelegte Block mit einem hohen Anteil an lipophoben Wiederholungseinheiten, die von einer oder mehreren Monomeren der Gruppe (II), (III) und/oder (IV) abgeleitet sind, vorzugsweise in der Nähe des Zentrums des Sternpolymeren angeordnet, so bringt diese Architektur eine Viskositätsindex-erhöhende Wirkung mit sich. Hierbei bedeutet der Ausdruck "in der Nähe des Zentrums", dass der Block vorzugsweise in der ersten Hälfte, besonders bevorzugt im ersten Drittel des entsprechenden Arms angeordnet ist, wobei das Zentrum den Anfang darstellt.

Ist der zuvor dargelegte Block mit einem hohen Anteil an lipophoben Wiederholungseinheiten, die von einer oder mehreren Monomeren der Gruppe (II) (III) und/oder (IV) abgeleitet sind, vorzugsweise in der Nähe des Endes des Arms des Sternpolymeren angeordnet, so bringt diese Architektur eine Viskositätsindex-erniedrigende Wirkung mit sich. Hierbei bedeutet der Ausdruck "in der Nähe des Endes eines Arms", dass der Block vorzugsweise in der zweiten Hälfte, besonders bevorzugt im letzten Drittel des entsprechenden Arms angeordnet ist, wobei das Zentrum den Anfang darstellt.

Polymere, die einen hohen Anteil an dispergierenden Monomeren der Gruppe (III) am Ende mindestens eines Armes aufweisen, können vielfach eine überraschend hohe Wirkung als Reibverbesserer aufweisen.

Gemäß einem besonderen Aspekt können daher Polymere in der Nähe des Zentrums einen Block, der einen hohen Anteil an einer oder mehreren ethylenisch ungesättigten Esterverbindungen der Formel (II) und/oder weiteren Comonomeren gemäß Gruppe (IV) umfasst, und einen Block, der von dispergierenden Monomeren (III) abgeleitet ist, in der Nähe des Endes des Armes aufweisen.

Die Länge der rein lipophoben Segmente beträgt mindestens 3, vorzugsweise mindestens 5 und besonders bevorzugt mindestens 10 Monomereinheiten. Vorzugsweise weisen die lipophoben Segmente einen über das Gewicht gemittelten Polymerisationsgrad im Bereich von 10 bis 100 auf.

Die erfindungsgemäßen Polymere können auf verschiedene Weise hergestellt werden.

So können diese Polymere ausgehend von einem multifunktionellen *core first* Initiator insbesondere durch Verfahren der kontrollierten radikalischen Polymerisation, wie beispielsweise ATRP, RAFT oder NMP hergestellt werden.

Das ATRP-Verfahren ist an sich bekannt. Es wird angenommen, dass es sich hierbei um eine "lebende" radikalische Polymerisation handelt, ohne dass durch die Beschreibung des Mechanismus eine Beschränkung erfolgen soll. In diesen Verfahren wird eine Übergangsmetallverbindung mit einer Verbindung umgesetzt, welche eine übertragbare Atomgruppe aufweist. Hierbei wird die übertragbare Atomgruppe auf die Übergangsmetallverbindung transferiert, wodurch das Metall oxidiert wird. Bei dieser Reaktion bildet sich ein Radikal, das an ethylenische Gruppen addiert. Die Übertragung der Atomgruppe auf die Übergangsmetallverbindung ist jedoch reversibel, so dass die Atomgruppe auf die wachsende Polymerkette rückübertragen wird, wodurch ein kontrolliertes Polymerisationssystem gebildet wird. Dementsprechend kann der Aufbau des Polymeren, das Molekulargewicht und die Molekulargewichtsverteilung gesteuert werden. Darüber hinaus offenbaren die Patentanmeldungen WO 96/30421, WO 97/47661, WO 97/18247, WO 98/40415 und WO 99/10387 Varianten der zuvor erläuterten ATRP.

Des Weiteren können die erfindungsgemäßen Polymere beispielsweise auch über RAFT-Methoden erhalten werden. Dieses Verfahren ist beispielsweise in WO 98/01478 und WO 2004/083169 ausführlich dargestellt, worauf für Zwecke der Offenbarung ausdrücklich Bezug genommen wird.

Weiterhin sind die erfindungsgemäßen Polymere durch NMP-Verfahren erhältlich, die unter anderem in US 4581429 beschrieben sind.

Umfassend, insbesondere mit weiteren Referenzen sind diese Methoden unter anderem in K. Matyjaszewski, T. P. Davis, Handbook of Radical Polymerization, Wiley Interscience, Hoboken 2002 dargestellt, worauf für Zwecke der Offenbarung ausdrücklich Bezug genommen wird.

Auch können die erfindungsgemäßen Sternpolymeren ausgehend von einem multifunktionellen *core first* Inititiator über andere bekannte "kontrollierte" Polymerisationsverfahren, wie über anionische Polymerisation, kationische Polymerisation oder GTP hergestellt werden. Die letztgenannten Verfahren sind an sich bekannt und z.B. beschrieben in G. Odian, Principles of Polymerization, John Wiley & Sons, 4th ed., New York 2004.

Um die erfindungsgemäßen Sternpolymere zu erhalten, werden hierbei vorzugsweise Initiatoren eingesetzt, die 3 bis 21, besonders bevorzugt 5 bis 15 und ganz besonders bevorzugt 7 bis 12 übertragbare Gruppen aufweisen. Diese Initiatoren sind vielfach an sich bekannt und in der zuvor dargelegten Literatur beschrieben.

Hierzu gehören unter anderem tris(Bromomethyl)mesitylen, tetrakis(Bromoemethly)benzol, hexakis(Bromomethyl)benzol sowie Phenol-, Cyclotetrasiloxan-, Cyclophosphazen-, Calixaren- und Cyclodextrinderivate.

Des Weiteren umfassen geeignete Initiatoren, die auf Zucker basieren, z.B. auf Basis von Glucose und Saccharose. Hierzu gehören unter anderem auch die ATRP-Initiatoren Penta(a-bromoisobutyryl)glucose und Octa(α-bromoisobutyryl)saccharose.

Die kontrollierte radikalische Polymerisation kann bei Normaldruck, Unter- od. Überdruck durchgeführt werden. Auch die Polymerisationstemperatur ist unkritisch. Im Allgemeinen liegt sie jedoch im Bereich von -20° bis 200°C, vorzugsweise 0° bis 150°C und besonders bevorzugt 50° bis 120°C.

Die kontrollierte radikalische Polymerisation kann mit oder ohne Lösungsmittel durchgeführt werden. Der Begriff des Lösungsmittels ist hierbei weit zu verstehen. Die Auswahl des Lösungsmittels erfolgt nach der Polarität der eingesetzten Monomeren, wobei bevorzugt 100N-Öl, leichteres Gasöl und/oder aromatische Kohlenwasserstoffe, beispielsweise Toluol oder Xylol eingesetzt werden können.

Vorzugsweise kann das erfindungsgemäße Sternpolymer in Ölformulierungen, insbesondere in Schmierölformulierungen und kosmetischen Formulierungen eingesetzt werden.

Vorzugsweise umfasst eine Schmierölformulierung Basisöle der API Gruppe I, II, III, IV und/oder Gruppe V. Eine Schmierölformulierung umfasst mindestens ein Schmieröl.

Zu den Schmierölen gehören insbesondere Mineralöle, synthetische Öle und natürliche Öle.

Mineralöle sind an sich bekannt und kommerziell erhältlich. Sie werden im Allgemeinen aus Erdöl oder Rohöl durch Destillation und/oder Raffination und gegebenenfalls weitere Reinigungs- und Veredelungsverfahren gewonnen, wobei unter den Begriff Mineralöl insbesondere die höhersiedenden Anteile des Roh- oder Erdöls fallen. Im Allgemeinen liegt der Siedepunkt von Mineralöl höher als 200 °C, vorzugsweise höher als 300 °C, bei 5000 Pa. Die Herstellung durch Schwelen von Schieferöl, Verkoken von Steinkohle, Destillation unter Luftabschluss von Braunkohle sowie Hydrieren von Stein- oder Braunkohle ist ebenfalls möglich. Zu einem geringen Anteil werden Mineralöle auch aus Rohstoffen pflanzlichen (z. B. aus Jojoba, Raps) od. tierischen (z. B. Klauenöl) Ursprungs hergestellt. Dementsprechend weisen Mineralöle, je nach Herkunft unterschiedliche Anteile an aromatischen, cyclischen, verzweigten und linearen Kohlenwasserstoffen auf.

Im Allgemeinen unterscheidet man paraffinbasische, naphthenische und aromatische Anteile in Rohölen bzw. Mineralölen, wobei die Begriffe paraffinbasischer Anteil für längerkettig bzw. stark verzweigte iso-Alkane und naphtenischer Anteil für Cycloalkane stehen. Darüber hinaus weisen Mineralöle, je nach Herkunft und Veredelung unterschiedliche Anteile an n-Alkanen, iso-Alkanen mit einem geringen Verzweigungsgrad, sogenannte monomethylverzweigten Paraffine, und Verbindungen mit Heteroatomen, insbesondere O, N und/oder S auf, denen bedingt polare Eigenschaften zugesprochen werden. Die Zuordnung ist jedoch schwierig, da einzelne Alkanmoleküle sowohl langkettig verzweigte Gruppen als auch Cycloalkanreste und aromatische Anteile aufweisen können. Für die Zwecke der vorliegenden Erfindung kann die Zuordnung beispielsweise gemäß DIN 51378 erfolgen. Polare Anteile können auch gemäß ASTM D 2007 bestimmt werden.

Der Anteil der n-Alkane beträgt in bevorzugten Mineralölen weniger als 3 Gew.-%, der Anteil der O, N und/oder S-haltigen Verbindungen weniger als 6 Gew.-%. Der Anteil der Aromaten und der monomethylverzweigten Paraffine liegt im Allgemeinen jeweils im Bereich von 0 bis 40 Gew.-%. Gemäß einem interessanten Aspekt umfasst Mineralöl hauptsächlich naphtenische und paraffinbasische Alkane, die im allgemeinen mehr als 13, bevorzugt mehr als 18 und ganz besonders bevorzugt mehr als 20 Kohlenstoffatome aufweisen. Der Anteil dieser Verbindungen ist im Allgemeinen ≥ 60 Gew.-%, vorzugsweise ≥ 80 Gew.-%, ohne dass hierdurch eine Beschränkung erfolgen soll. Ein bevorzugtes Mineralöl enthält 0,5 bis 30 Gew.-% aromatische Anteile, 15 bis 40 Gew.-% naphthenische Anteile, 35 bis 80 Gew.-% paraffinbasische Anteile, bis zu 3 Gew.-% n-Alkane und 0,05 bis 5 Gew.-% polare Verbindungen, jeweils bezogen auf das Gesamtgewicht des Mineralöls.

Eine Analyse von besonders bevorzugten Mineralölen, die mittels herkömmlicher Verfahren, wie Harnstofftrennung und Flüssigkeitschromatographie an Kieselgel, erfolgte, zeigt beispielsweise folgende Bestandteile, wobei sich die Prozentangaben auf das Gesamtgewicht des jeweils eingesetzten Mineralöls beziehen:
n-Alkane mit ca. 18 bis 31 C-Atome:
   0,7 - 1,0 %,
gering verzweigte Alkane mit 18 bis 31 C-Atome:
   1,0 - 8,0 %,
Aromaten mit 14 bis 32 C-Atomen:
   0,4 - 10,7 %,
Iso- und Cyclo-Alkane mit 20 bis 32 C-Atomen:
   60,7- 82,4 %,
polare Verbindungen:
   0,1 - 0,8%,
Verlust:
   6,9 - 19,4 %.

Wertvolle Hinweise hinsichtlich der Analyse von Mineralölen sowie eine Aufzählung von Mineralölen, die eine abweichende Zusammensetzung aufweisen, findet sich beispielsweise in Ullmanns Encyclopedia of Industrial Chemistry, 5th Edition on CD-ROM, 1997, Stichwort "lubricants and related products".

Synthetische Öle umfassen unter anderem organische Ester, beispielsweise Diester und Polyester, Polyalkylenglykole, Polyether, synthetische Kohlenwasserstoffe, insbesondere Polyolefine, von denen Polyalphaolefine (PAO) bevorzugt sind, Silikonöle und Perfluoralkylether. Sie sind meist etwas teurer als die mineralischen Öle, haben aber Vorteile hinsichtlich ihrer Leistungsfähigkeit.

Natürliche Öle sind tierische oder pflanzliche Öle, wie beispielsweise Klauenöle oder Jojobaöle.

Diese Öle können auch als Mischungen eingesetzt werden und sind vielfach kommerziell erhältlich.

Die Konzentration des Sternpolymeren in der Ölformulierung liegt vorzugsweise im Bereich von 1 bis 25 Gew.-%, bezogen auf das Gesamtgewicht der Zusammensetzung.

Bevorzugte Ölformulierungen weisen eine gemäß ASTM D 445 bei 40°C gemessenen Viskosität im Bereich von 10 bis 120 mm²/s, besonders bevorzugt im Bereich von 22 bis 100 mm²/s auf.

Die Ölformulierungen der vorliegenden Erfindung weisen im Allgemeinen eine hohe Scherstabilität auf, die insbesondere als permanenter Scherstabilitäts-Index (PSSI) angegeben werden kann. Vorzugsweise beträgt der PSSI nach ASTM D5621 (40min Ultraschall) höchstens 25 und ganz besonders bevorzugt höchstens 20. Der gemäß DIN 51350, Teil 6 (20h Kegelrollenlager) gemessene PSSI beträgt vorzugsweise höchstens 50 und ganz besonders bevorzugt höchstens 30.

Gemäß einem besonderen Aspekt der vorliegenden Erfindung weisen bevorzugte Ölformulierungen einen gemäß ASTM D 2270 bestimmten gezielt einstellbaren Viskositätsindex im Bereich von 0 bis 300 auf. Gemäß einem besonderen Aspekt der vorliegenden Erfindung können hierbei die Polymere einen Viskositätsindex von mindestens 150, bevorzugt mindestens 200 und ganz besonders bevorzugt mindestens 250 aufweisen. Gemäß einem anderen Aspekt der vorliegenden Erfindung können die Polymere einen Viskositätsindex von höchstens 100, besonders bevorzugt höchstens 50 aufweisen.

Hohe Viskositätsindizes beinhalten, dass optional vorhandene lipophobe Wiederholungseinheiten in der Nähe des Zentrums des Sternpolymeren angeordnet sind. Zu den lipophoben Wiederholungseinheiten gehören insbesondere Methyl(meth)acrylat und Ethyl(meth)acrylat.

Für andere Anwendungen können assoziierende Eigenschaften wünschenswert sein, beispielsweise als Kosmetikzusatzstoff, um eine Gelierung zu ermöglichen. Derartige Polymere können daher insbesondere als Geliermittel eingesetzt werden. Bei derartigen assoziierenden Polymeren von niedrigem Viskositätsindex befindet sich mindestens ein Block, der hohe Anteile an lipophoben, assoziierenden Wiederholungseinheiten umfasst, in der Nähe des Endes eines Arms des Sternpolymeren.

Neben den zuvor genannten Sternpolymeren kann ein Ölformulierung im besondern Fall der Schmierölformulierung weitere Additive und Zusatzstoffe enthalten.

Zu diesen Additiven gehören unter anderem Antioxidantien, Korrosionsinhibitoren, Antischaummittel, Anti-Wear-Komponenten, Farbstoffe, Farbstabilisatoren, Detergentien und/oder DI-Additive.

Des Weiteren umfassen diese zusätzlichen Additive Viskositätsindexverbesserer, Stockpunktverbesserer, Dispergiermittel und/oder Reibveränderer, die besonders bevorzugt auf einem linearen Polyalkyl(meth)acrylat mit 1 bis 30 Kohlenstoffatomen in der Alkoholgruppe basieren können. Diese linearen Polyalkyl(meth)acrylate sind insbesondere im einleitend diskutierten Stand der Technik beschrieben, wobei diese Polymere dispergierende Monomere aufweisen können.

Die erfindungsgemäßen Sternpolymere werden bevorzugt als Viskositätsveränderer (*viscosity modifier*), Stockpunktverbesserer, Dispergiermittel und/oder Reibveränderer verwendet werden. Als Viskositätsveränderer sind gemäß obiger Darstellung sowohl ViskositätsindexVerbesserer als auch Gelierungsmittel zu verstehen.

Nachfolgend wird die Erfindung anhand von Beispielen näher erläutert, ohne dass hierdurch eine Beschränkung erfolgen soll.

### A) Herstellung der Polymere

### 1. Herstellung der multifunktionellen Initiatoren

Die Synthesen des 5-Arm-Initiators Penta(α-bromoisobutyryl)glucose und des 8-Arm-Initiators Octa(α-bromoisobutyryl)saccharose erfolgten nach einer literaturbeschrieben Methode (M. H. Stenzel-Rosenbaum, T. P. Davis, V. Chen, A. Fane, Macromolecules 34 (2001), 5433) mit 73% bzw. 72% Ausbaute. Der Struktur-Nachweis erfolgte jeweils über ¹H-NMR, welche sich mit den LiteraturDaten (M. H. Stenzel-Rosenbaum et. al) deckten.

Weiterhin wurden beide Initatoren über MALDI-ToF-MS charakterisiert. Dazu wurde das Bruker Daltonics Reflex 3 mit 337nm-N₂-Laser bei 20kV Beschleunigungsspannung verwendet. Die Proben wurden jeweils im Massenverhältnis 2,5-Dihydroxybenzoesäure/LiCl/Initiator = 10/1/1 gemischt. Im Falle der Penta(α-bromoisobutyryl)glucose wurden 100mol% mit 5fach-Funktionalisierung (M+M_{Li+}=931g/mol) und im Falle der Octa(α-bromoisobutyryl)saccharose wurden 87mol% mit 8fach-Funktionalisierung (M+M_{Li+}=1541 g/mol) sowie 13mol% mit 7fach-Funktionalisierung (M+M_{Li+}=1393g/mol) identifiziert.

### 2. Herstellung der erfindungsgemäßen Sternpolymere

Es wurde eine Apparatur bestehend aus 2L-Reaktionskolben mit Tropftrichter, Säbelrührer, Kühler, Thermometer und N₂-Zuleitung genutzt. Zunächst wurden 500g Monomere gemäß Tabelle 1 zusammen mit 500g i-Octan im Reaktionskolben vorgelegt. Anschließend wurden 0.6g CuCl, 0.01g CuBr₂ und Initiator (25g bis 2,5g Penta(α-bromoisobutyryl)glucose bzw. Octa(α-bromoisobutyryl)saccharose je nach gewünschter Armzahl und gewünschtem Molekulargewicht) zugegeben. Nach Inertisierung durch N₂-Durchleitung und Erwärmen auf 60°C wurden 1.1g Pentamethylendiethylentriamin hinzugegeben, um die Reaktion zu starten, wobei eine heterogene Mischung gegeben war, da der komplexierte Katalysator nur unvollständig gelöst vorlag. Nach erkennbarer Exotherme lies man 6h bei 60° reagieren, dann 6h bei 70°C, dann 6h bei 80° und weitere 40h bei 90°C [im Falle der Stern(block)-PAMA wurde bei 90°C das Blockcomonomer innerhalb von 5min zugetropft und weitere 40h bei 90°C reagieren gelassen]. Der Abbruch erfolgte durch Zugabe von 5ml einer Lösung aus 10g/L CuBr₂, 10g/L Pentamethylendiethylentriamin und 5g/L Irganox^{®} 1010 in i-Octan. Die Reaktionslösung wurde über eine Al₂O₃-Säule zur Entfernung der Kupfersalze warm druckfiltriert. Das Produkt wurde mehrfach mit dem 3fachen Volumen an Methanol digeriert und das Methanol abdekantiert. Schließlich wurde das Methanol abgezogen. Man erhielt ein lösungsmittelfreies 100%iges viskoses bis gummiartiges Polymer.

### 3. Herstellung von engverteilten linearen Polymeren

Alle engverteilten linearen (Block)-PAMA bis auf Vergleichsbeispiel 7 wurden per ATRP hergestellt. Vergleichsbeispiel 7, welches das Kupfer-komplexierende Monomere DMAPMAAm enthält, wurde per RAFT hergestellt.

### 3.1. Herstellung der Vergleichsbeispiele 1 bis 6 (ATRP)

Es wurde eine Apparatur bestehend aus 2L-Reaktionskolben mit Tropftrichter, Säbelrührer, Kühler, Thermometer und N₂-Zuleitung genutzt. Zunächst wurden 600g Monomere gemäß Tabelle 1 [564g C12/13/14/15MA im Falle des linearen Block-PAMA Vergleichsbeispiel 6] zusammen mit 400g 100N-Öl im Reaktionskolben vorgelegt und durch Trockeneiszugabe und Überleiten von N₂ inertisiert. Anschließend wurde die Mischung unter Rühren auf 95°C erwärmt. Während des Aufwärmvorgangs bei etwa 70°C wurden 1.1g CuBr und 1.4g Pentamethylendiethylentriamin zugegeben, wobei eine heterogene Mischung erhalten wurde, da der komplexierte Katalysator nur unvollständig gelöst vorlag. Nach Erreichen der vorgegebenen Temperatur von 95°C wurde Ethylbromoisobutyrat (7.5g bis 1.5g je nach gewünschtem Molekulargewicht) zugesetzt, um die Reaktion zu starten. Man lies 6h bei 95°C reagieren [im Falle von Vergleichsbeispiel 6 lies man 2h bei 95°C reagieren, tropfte 36g DMAEMA innerhalb von 5min zu und lies weitere 4h bei 95°C reagieren]. Anschließend wurde die Mischung zur Entfernung der Kupfersalze warm druckfiltriert (Seitz T1000 10µm Tiefenfilter). Man erhielt eine 60%ige viskose Lösung.

### 3.2. Herstellung des Vergleichsbeispiels 7 (RAFT)

Vergleichsbeispiel 7 wurde per RAFT in einem 2L-Reaktionskolben einer Apparatur mit Tropftrichter, Säbelrührer, Kühler, Thermometer und N₂-Zuleitung hergestellt. Dazu wurden 540g C12/13/14/15MA zusammen mit 2.71 g Cumyldithiobenzoat, 1.14g tert-Butylperoctoat und 400g 100N-Öl im Reaktionskolben vorgelegt und durch Trockeneiszugabe und Überleiten von N₂ inertisiert. Anschließend wurde die Mischung auf 85°C erwärmt. Nach 5h wurden 60g DMAPMAAm zugetropft. Nach weiteren 2.5h wurden 0.60g *tert-*Butylperoctoat zugesetzt und die Reaktionsmischung über Nacht bei 85°C gerührt. Man erhielt eine 60%ige rötliche viskose Lösung.

### 4. Herstellung von konventionellen linearen Polymeren (Vergleichsbeispiele 8 bis 13

600g Monomere nach Tabelle 1 und n-Dodecylmercaptan (20g bis 2g je nach gewünschtem Molekulargewicht) werden gemischt. 44.4g dieser Monomer/Regler-Mischung werden zusammen mit 400g 100N-Öl in den 2L-Reaktionskolben einer Apparatur mit Säbelrührer, Kühler, Thermometer, Zulaufpumpe und N₂-Zuleitung gefüllt. Die Apparatur wird inertisiert und mithilfe eines Ölbades auf 100°C aufgeheizt. Das verbleibende Gros von 555.6g Monomer/Regler-Mischung wird mit 1.4g tert-Butylperoctoat versetzt. Hat das Gemisch im Reaktionskolben eine Temperatur von 100°C erreicht, werden 0.25g *tert*-Butylperoctoat zugegeben, gleichzeitig der Zulauf des Monomer/Regler/Initiator-Gemischs mittels Pumpe gestartet. Die Zugabe erfolgt gleichmäßig über einen Zeitraum von 210min bei 100°C. 2h nach Zulaufende werden nochmals 1.2g tert-Butylperoctoat zugegeben und weitere 2h bei 100°C gerührt. Man erhielt eine 60%ige klare Lösung.

### B) Bestimmung der Molekulargewichte

Die massengemittelten Molekulargewichte M_{w} sowie der Polydispersitätsindex PDI der Polymeren wurde per GPC bestimmt (Tabelle 1). Die Messungen erfolgten in Tetrahydrofuran bei 35°C gegen eine Polymethylmethacrylat-Eichkurve aus einem Satz von ≥25 Standards (Polymer Standards Service bzw. Polymer Laboratories), deren Mₚₑₐₖ logarhythmisch gleichmäßig über den Bereich von 5·10⁶ bis 2·10² g/mol verteilt lag. Es wurde eine Kombination aus sechs Säulen (Polymer Standards Service SDV 100Å / 2x SDV LXL / 2× SDV 100Å / Shodex KF-800D) verwendet. Zur Signalaufnahme wurde ein RI-Detektor (Agilent 1100 Series) eingesetzt.

Bei den Molekulargewichten M_{w} der Stem(block)-PAMA handelt es sich aufgrund einer Sternstruktur-bedingt veränderten Beziehung hydrodynamischem Volumen und Molekulargewicht M_{w} nur um apparente Werte. Typischerweise liegen die für Sternpolymere gemessenen Werte etwas höher als die der konventionellen oder engverteilten linearen PAMA von ähnlichem PSSI.

Alle Molekulargewichtsverteilungen der per ATRP hergestellten Stempolymere waren streng monomodal mit keinerlei Hinweisen auf radikalische Stern-Stem-Kopplungen, die falls vorhanden etwa bei doppeltem zahlengemittelten Mₙ erkennbar wären, oder auf Vernetzungen, die an Ausläufern zu höheren Molekulargewichten erkennbar wären.

**Tabelle 1: Verwendete Polymere.**

| | Zusammensetzung | M_{w} [g/mol] | PDI |
|---|---|---|---|
| Beispiel 1 | (C12/13/14/15MA)₈ | 29,390 | 1.2 |
| Beispiel 2 | (C12/14MA)₈ | 35,700 | 1.1 |
| Beispiel 3 | (c12/14MA)₅ | 89,800 | 1.2 |
| Beispiel 4 | (c12/14MA)₈ | 117,100 | 1.1 |
| Beispiel 5 | (c12/14MA)₅ | 407,200 | 1.9 |
| Beispiel 6 | (C12/14MA-*block*-DMAEMA 94-6)₈ | 46,660 | 1.2 |
| Beispiel 7 | (C12/14MA-*block*-MMA 94-6)₈ | 110,300 | 1.1 |
| Beispiel 8 | (C12/14MA-*block*-MMA 96-4)₈ | 112,800 | 1.1 |
| Vergleichsbeispiel 1 | C12/13/14/15MA | 16,160 | 1.3 |
| Vergleichsbeispiel 2 | C12/13/14/15MA | 23,450 | 1.3 |
| Vergleichsbeispiel 3 | C12/13/14/15/16/18MA-*co*-MMA 90-10 | 70,510 | 1.2 |
| Vergleichsbeispiel 4 | C12/13/14/15/16/18MA-*co*-MMA 90-10 | 80,000 | 1.5 |
| Vergleichsbeispiel 5 | C12/13/14/15MA-*co*-MMA 90-10 | 79,800 | 1.5 |
| Vergleichsbeispiel 6 | C12/13/14/15MA-*block*-DMAEMA 94-6 | 70,000 | 1.6 |
| Vergleichsbeispiel 7 | C12/13/14/15MA-*block*-DMAPMAAm 90-10 | 111,000 | 1.6 |
| Vergleichsbeispiel 8 | C12/13/14/15MA | 14,740 | 1.6 |
| Vergleichsbeispiel 9 | C12/13/14/15MA | 23,170 | 2.0 |
| Vergleichsbeispiel 10 | C12/13/14/15MA-*co*-MMA 88-12 | 22,400 | 1.9 |
| Vergleichsbeispiel 11 | C12/13/14/15MA-*co*-MMA 82-18 | 71,000 | 2.2 |
| Vergleichsbeispiel 12 | C12/13/14/15/16/18MA-*co*-MMA 87-13 | 375,000 | 2.7 |
| Vergleichsbeispiel 13 | C12/13/14/15/16/18MA-*co*-MMA 86-14 | 64,000 | 2.1 |

Es stehen C12/14MA, C12/13/14/15MA, C12/13/14/15/16/18MA für ein Methacrylatgemisch, das von dem entsprechenden Alkoholgemisch abgeleitet wurde, MMA für Methylmethacrylat, DMAEMA für Dimethylaminoethylmethacrylat und DMAPMAAm für Dimethylaminopropylmethacrylamid. Die Zahlenangaben bezüglich der Copolymere beziehen sich auf den Gewichtsanteil der Monomeren. Die Indizes stehen für die Anzahl der Arme, die sich aus den eingesetzten Initiatoren ergibt.

### C) Evaluierung der Polymere

Im Falle der konventionellen linearen PAMA und der engverteilten linearen (Block)-PAMA, welche nur als Lösung in 100N-Trägeröl vorlagen, wurde beim Formulieren das 100N-Trägeröl vernachlässigt und jeweils der Formulieröl-Einwaage zugeschlagen.

### 1. Verdickungswirkung der Polymere in Bezug auf PSSI und VI

Tabelle 2 belegt, dass bei ähnlichem PSSI - sei es nach DIN 51350 (Teil 6, 20h Kegelrollerlager), nach ASTM D5621 (40min Ultraschall) oder nach DIN 51382 (30 Zyklen Bosch-Pumpe) - und ähnlichem VI (ASTM D2270) im Falle der erfindungsgemäßen PAMA-Sterne im Vergleich zu konventionell hergestelltem linearem PAMA (1.6 ≤ PDI ≤ 2.7) und engverteiltem linearem PAMA (1.3 ≤ PDI ≤ 1.5) die für eine kinematische Viskosität bei 100°C KV100=14.0mm²/s (ASTM D445) nötige Polymerkonzentration in einem 150N-Öl erheblich reduziert ist.

Das 150N-Öl hatte KV100=5.42mm²/s, KV40=31.68mm²/s und VI=105 als visksimetrische Daten. Es wurden jeweils 0.6% Chevron-Oronite Oloa 4992 Verschleißschutzadditiv zugesetzt.

**Tabelle 2: Polymergehalte bei ähnlichem PSSI und VI.**

| | | Polymergehalt [%] | PSSI | VI |
|---|---|---|---|---|
| DIN 51350, Teil 6 20h Kegelrollenlager | Beispiel 1 | 18.0 | 11 | 157 |
| | Vergleichsbeispiel 1 | 24.1 | 10 | 156 |
| | Vergleichsbeispiel 8 | 28.6 | 8 | 153 |
| | Beispiel 2 | 16.7 | 16 | 165 |
| | Vergleichsbeispiel 2 | 20.6 | 17 | 163 |
| | Vergleichsbeispiel 10 | 22.0 | 19 | 155 |
| | Beispiel 3 | 8.6 | 60 | 177 |
| | Vergleichsbeispiel 3 | 12.2 | 59 | 180 |
| ASTM D5621 40min Ultraschall | Beispiel 2 | 16.7 | 3 | 165 |
| | Vergleichsbeispiel 2 | 20.6 | 2 | 163 |
| | Vergleichsbeispiel 9 | 23.8 | 4 | 159 |
| | Beispiel 4 | 7.8 | 28 | 179 |
| | Vergleichsbeispiel 4 | 10.2 | 27 | 185 |
| 30 Zyklen Bosch-Pumpe DIN 51382 | Beispiel 5 | 2.7 | 52 | 187 |
| | Vergleichsbeispiel 12 | 3.6 | 50 | 202 |

Tabelle 3 zeigt weiterhin, dass bei deutlich besserem Langzeit-PSSI (DIN 51350, Teil 6, 192h Kegelrollenlager) und ähnlichem VI im Falle des erfindungsgemäßen PAMA-Sterns Beispiel 1 in Vergleich zu konventionell hergestelltem linearem PAMA Vergleichsbeispiel 9 die für KV100=13.15mm²/s nötige Polymerkonzentration in einer VII-freien, PPD- und D/I-Paket-haltigen API-Gruppe-III GO-Formulierung erheblich reduziert ist. Dabei ist insbesondere bemerkenswert, dass der PAMA-Stern Beispiel 1 auch ähnliche Tieftemperatureigenschaften (dynamische mit Brookfield-Viskosimetern gemessene Viskosität bei -40°C BF-40 nach DIN 51398, kinematische Viskosität bei -10°C KV-10 nach ASTM D445, Stockpunkt (*pour point*) PP nach ASTM D97) wie das konventionell hergestellte lineare PAMA Vergleichsbeispiel 9 mit sich bringt.

Die VII-freie, PPD-haltige (*pour point depressant*) und D/I-Paket-haltige (*dispersant & inhibitor*) API-Gruppe-III GO-Formulierung (gear oil) basierend auf Hydrocracköl und Polyalphaolefin hatte KV100=5.15mm²/s, KV40=25.30mm²/s und VI=137 als viskosimetrische Daten mit PP=-45°C.

**Tabelle 3: Polymergehalt bei besserem Langzeit-PSSI, vergleichbarem VI und vergleichbaren Tieftemperatureigenschaften.**

| | Polymergehalt [%] | Langzeit-PSSI | VI | BF-40 [mPas] | KV-10 [mm²/s] | PP [°C] |
|---|---|---|---|---|---|---|
| Beispiel 1 | 18.4 | 34 | 179 | 40250 | 1372 | -45 |
| Vergleichsbeispiel 9 | 22.1 | 45 | 176 | 41500 | 1448 | -45 |

### 2. Evaluierung der Reibeigenschaften

Auch die Eigenschaften der erfindungsgemäßen PAMA-Blocksterne als Reibveränderer wurden untersucht (Tabelle 4). Dazu wurden die Polymere mit einem 150N-Grundöl (BP Enerpar 11) auf KV120=9.2mm²/s eingestellt. Die Formulierungen wurden anschließend mithilfe eines Tribometers (Mini Traction Machine 3, PCS Instruments) Reibungsmessungen mit Geschwindigkeiten im Bereich von 0.005 bis 2.5m/s unterworfen. Dabei lag die Temperatur konstant bei 120°C mit einer Last von 30N (entspricht 0.93GPa max. Hertz'schem Anpressdruck) und einem Gleit/Roll-Verhältnis von 50%. Die Scheibe bestand aus Stahl vom Typ AISI 52100 (Durchmesser 40.0 mm, Rauhigkeit rms (*root mean square*) 25 bis 30nm, Rockwell-C-Härte 63, elastischer Modul 207GPa), ebenso wie der Ball (Durchmesser 19.0mm, Rauhigkeit rms 10 bis 13 nm, Rockwell-C-Härte 58 bis 65, elastischer Modul 207 Gpa). Als Ergebnis eines Reibexperiments wurde eine *Stribeck*-Kurve erhalten, aus der die Reibungskoeffizienten f bei 10mm/s ermittelt wurden.

Es zeigt sich, dass der erfindungsgemäße PAMA-Blockstern Beispiel 6 mit nach außen gewandten DMAEMA-Blöcken trotz geringstem Feststoffgehalt einen erheblich besseren Reibungskoeffizienten f ergibt, als die über ATRP hergestellten linearen PAMA-Blockcopolymere Vergleichsbeispiel 6 und Vergleichsbeispiel 7.

**Tabelle 4: Reibungseigenschaften.**

| | Polymergehalt [%] | f |
|---|---|---|
| Beispiel 6 | 5.6 | 0.022 |
| Vergleichsbeispiel 6 | 9.6 | 0.043 |
| Vergleichsbeispiel 7 | 6.7 | 0.026 |

### 3. Evaluierung der Filtrierbarkeit

Zur Überprüfung der Anwendbarbeit der PAMA-Sterne z.B. in partikelfreien Hydraulikformulierungen wurde die wasserfreie Filtrierbarkeit bei 1 bar Druck durch 5µm-Filter nach ISO 13357-2 untersucht (Tabelle 6). Bei diesem Test gibt Stufe 1 eine projezierte Filtrierbarkeit F₁≤100% aus frühen Daten der Filtration und Stufe 2 eine Filtrierbarkeit F₂≤100% über gesamten Verlauf der Filtration an.

Dabei wurde der PAMA-Stern Beispiel 2 in 150N-Öl gegen konventionell hergestelltes lineares Vergleichsbeispiel 13 verglichen. Es zeigen sich für Beispiel 2 überraschende Vorteile im Hinblick auf die Filtrierbarkeit, obwohl der Polymergehalt in der verwendeten Formulierung höher ist, sodass die Fließfähigkeiten KV40 und KV100 geringer sind.

**Tabelle 6: Filtrierbarkeit.**

| | Polymergehalt [%] | KV40 [mm²/s] | KV100 [mm²/s] | F₁ [%] | F₂ [%] |
|---|---|---|---|---|---|
| Beispiel 2 | 15.0 | 78.0 | 12.6 | 97 | 90 |
| Vergleichsbeispiel 13 | 5.0 | 45.4 | 8.1 | 88 | 66 |

### 4. Evaluierung der Oxidationsstabilität

Zur Überprüfung der Oxidationsstabilität (Tabelle 7) wurden Oxidationstests gemäß CEC L-48-A-00 (B) (160°C, 192h, 5Uh Luftdurchfluss) mit einer Lösung von 5.3% Polymer in einer VII-freien, PPD- und D/I-Paket-haltigen API-Gruppe-I GO-Formulierung durchgeführt und die relative Veränderung ΔKV100ᵣₑₗ bestimmt. Zusätzlich wurden nach erfolgter Oxidation die n-Hexan-unlöslichen Bestandteile Iₛ (*insolubles*) aus der Suspension gravimetrisch bestimmt. Ein Vergleich mit konventionell hergestelltem linearen PAMA (Vergleichsbeispiel 11) zeigte überraschende Vorteile für den PAMA-Stern Beispiel 2.

Die genannte API-Gruppe-I GO-Formulierung basierte auf paraffinischem Mineralöl und hatte KV40=21.96mm²/s, KV100=4.33mm²/s und VI=107 als viskosimetrische Daten.

**Tabelle 7: Oxidationstabilität.**

| | KV100 [mm²/s] | ΔKV100ᵣₑₗ [%] | I_{S} [%] |
|---|---|---|---|
| Beispiel 2 | 5.9 | 10.4 | 0.62 |
| Vergleichsbeispiel 11 | 7.3 | 19.2 | 0.92 |

### D) Anwendung als Geliermittel

Tabelle 8 belegt erneut, dass für Polymerproben von ähnlichem PSSI - sei es nach DIN 51350 (Teil 6, 20h Kegelrollenlager) oder nach ASTM D5621 (40min Ultraschall) - z.B. im Falle der erfindungsgemäßen PAMA-Blocksterne Beispiel 8 und Beispiel 9 im Vergleich zu über ATRP hergestelltem linearem PAMA Vergleichsbeispiel 3 und Vergleichsbeispiel 5 die für KV100=14.0mm²/s nötige Polymerkonzentration in einem 150N-Öl erheblich reduziert ist. Dabei ist zusätzlich insbesondere bemerkenswert, dass die blockartige Struktur der PAMA-Blocksterne mit nach außen gewandten MMA-Blöcken dafür sorgt, die Viskosität über reversible Assoziatiwerdickung bei reduzierter Temperatur (40°C) außergewöhnlich hoch ansteigen zu lassen (Tabelle 8). Dies spiegelt sich in gezielt geringem VI im Falle von Beispiel 7 und Beispiel 8 verglichen mit Vergleichsbeispiel 3 und Vergleichsbeispiel 5 wider. Scherung zerstört den bei 40°C gegebenen Assoziativeffekt jedoch wieder, erkennbar an der Beobachtung, dass PSSI_{40°C} > PSSI_{100°C} ≡ PSSI. Typischerweis gilt für lineare PAMA jedoch PSSI_{40°C} = PSSI_{100°C} bis PSSI_{40°C} ≤ PSSI_{100°C}.

Das 150N-Öl hatte KV100=5.42mm²/s, KV40=31.68mm²/s und VI=105 als viskosimetrische Daten. Es wurden jeweils 0.6% Chevron-Oronite Oloa 4992 Verschleißschutzadditiv zugesetzt.

**Tabelle 8: Eigenschaften als Assoziatiwerdicker.**

| | | Polymergehalt [%] | PSSI | VI | PSSI_{40°C} |
|---|---|---|---|---|---|
| DIN 51350, Teil 6 20h Kegelrollenlager | Beispiel 7 | 6.4 | 70 | 27 | 91 |
| | Beispiel 8 | 9.0 | 67 | 110 | 79 |
| | Vergleichsbeispiel 3 | 12.2 | 59 | 180 | 58 |
| ASTM D5621 40min Ultraschall | Beispiel 7 | 6.4 | 26 | 27 | 60 |
| | Beispiel 8 | 9.0 | 23 | 110 | 28 |
| | Vergleichsbeispiel 5 | 10.2 | 26 | 185 | 25 |

## Patentansprüche

1. Polymer umfassend 50-100 Gew.-%, bezogen auf das Gewicht des Polymeren, Wiederholungseinheiten, die von einer oder mehreren ethylenisch ungesättigten Esterverbindungen der Formel (I) 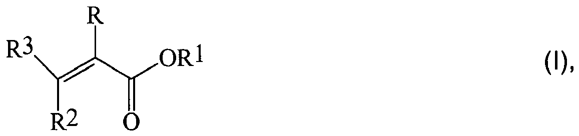 worin R Wasserstoff oder Methyl darstellt, R¹ einen linearen oder verzweigten Alkylrest mit 7 bis 30 Kohlenstoffatomen bedeutet, R² und R³ unabhängig Wasserstoff oder eine Gruppe der Formel -COOR' darstellen, worin R' Wasserstoff oder eine Alkylgruppe mit 7 bis 30 Kohlenstoffatomen bedeutet, abgeleitet sind,
**dadurch gekennzeichnet, dass** das Polymer ein Sternpolymer mit 3 bis 21 Armen ist und mindestens 3 der Arme mindestens 40 Gew.-%, bezogen auf das Gewicht der Arme, Wiederholungseinheiten umfassen, die von einer oder mehreren ethylenisch ungesättigten Esterverbindungen der Formel (I) 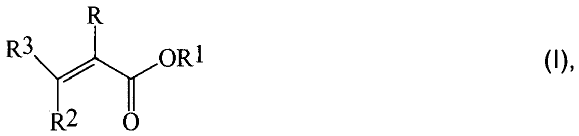 worin R Wasserstoff oder Methyl darstellt, R¹ einen linearen oder verzweigten Alkylrest mit 7 bis 30 Kohlenstoffatomen bedeutet, R² und R³ unabhängig Wasserstoff oder eine Gruppe der Formel -COOR' darstellen, worin R' Wasserstoff oder eine Alkylgruppe mit 7 bis 30 Kohlenstoffatomen bedeutet, abgeleitet sind, und dass das Polymer durch kontrollierte Polymerisation ausgehend von einem multifunktionellen Initiator hergestellt wird, wobei die Anzahl der Polymerarme von der Anzahl der Funktionen, die der Initiator aufweist, abhängig ist und das Zentrum höchstens 50, bevorzugt höchstens 25 Kohlenstoffatome aufweist, und dass die Polydispersität M_{w}/Mₙ des Sternpolymeren im Bereich von 1,0 bis 2,0 liegt.

2. Polymer gemäß Anspruch 1, **dadurch gekennzeichnet, dass** das Polymer eine Filtrierbarkeit von mindestens 90%, bezogen auf eine projizierte Filtrierbarkeit (Stufe 1) nach ISO 13357-2 aufweist.

3. Polymer gemäß mindestens einem der vorhergehenden Ansprüche,
**dadurch gekennzeichnet, dass** das Sternpolymer 5 bis 12 Arme aufweist.

4. Polymer gemäß mindestens einem der vorhergehenden Ansprüche,
**dadurch gekennzeichnet, dass** das Sternpolymer ein Gewichtsm ittel des Molekulargewichts M_{w} im Bereich von 25000 bis 150000 g/mol und eine Polydispersität M_{w}/Mₙ im Bereich von 1,0 bis 1,3 aufweist.

5. Polymer gemäß mindestens einem der vorhergehenden Ansprüche,
**dadurch gekennzeichnet, dass** Polymer 0,1 bis 40 Gew.-% Wiederholungseinheiten aufweist, die von einer oder mehreren ethylenisch ungesättigten Esterverbindungen der Formel (II) 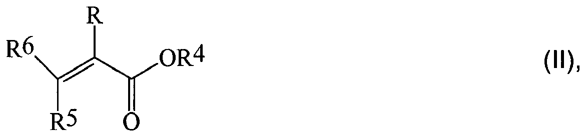 worin R Wasserstoff oder Methyl darstellt, R4 einen linearen oder verzweigten Alkylrest mit 1 bis 6 Kohlenstoffatomen bedeutet, R5 und R6 unabhängig Wasserstoff oder eine Gruppe der Formel -COOR" darstellen, worin R" Wasserstoff oder eine Alkylgruppe mit 1 bis 6 Kohlenstoffatomen bedeutet, abgeleitet sind.

6. Polymer gemäß mindestens einem der vorhergehenden Ansprüche,
**dadurch gekennzeichnet, dass** das Polymer bis 30 Gew.% Wiederholungseinheiten aufweist, die von dispergierenden Monomeren (III) abgeleitet sind, und dass das dispergierende Monomer ein dispergierendes (Meth)acrylat auf Basis eines Alkohol R⁷-OH oder ein (Meth)acrylamid auf Basis eines Amin R⁷-NR⁸-H darstellt, dass R⁷ unabhängig eine höchstens 10 Kohlenstoffatome umfassende Gruppe mit mindestens einem Heteroatom darstellt und dass mit R⁸ unabhängig Wasserstoff oder eine Gruppe mit 1 bis 20 Kohlenstoffatomen gegeben ist.

7. Polymer gemäß Anspruch 6, **dadurch gekennzeichnet, dass** der Rest R⁷ mindestens eine Gruppe der Formel -OR⁸ oder -NR⁸R⁸ umfasst, worin die Reste R⁸ unabhängig Wasserstoff oder eine Gruppe mit 1 bis 20 Kohlenstoffatomen darstellen.

8. Polymer gemäß mindestens einem der vorhergehenden Ansprüche,
**dadurch gekennzeichnet, dass** das Sternpolymer mindestens zwei Blöcke aufweist.

9. Polymer gemäß Anspruch 8, **dadurch gekennzeichnet, dass** das Sternpolymer mindestens einen lipophilen und einen lipophoben Block aufweist.

10. Polymer gemäß Anspruch 9, **dadurch gekennzeichnet, dass** mindestens ein lipophober Block mindestens 50 Gew.-%, bezogen auf das Gewicht des Blocks, an Wiederholungseinheiten aufweist, die von einer oder mehreren ethylenisch ungesättigten Esterverbindungen der Formel (II), dispergierenden Monomeren (III) und/oder weiteren Comonomeren gemäß Gruppe (IV) abgeleitet sind.

11. Polymer gemäß Anspruch 9 oder 10, **dadurch gekennzeichnet, dass** das Polymer innerhalb eines lipophoben Blocks lipophoben Segmente mit einer ganzzahligen Segmentlänge größer oder gleich 3 ausweist.

12. Polymer gemäß mindestens einem der Ansprüche 9 bis 11, **dadurch gekennzeichnet, dass** der lipophobe Block in der Nähe des Zentrums eines Viskositätsindex-erhöhenden Sternpolymeren angeordnet ist.

13. Polymer gemäß mindestens einem der Ansprüche 9 bis 11, **dadurch gekennzeichnet, dass** der lipophobe Block in der Nähe des Endes des Arms eines Viskositätsidex-erniedrigenden Sternpolymeren angeordnet ist.

14. Polymer gemäß Anspruch 12 und 13, **dadurch gekennzeichnet, dass** das Polymer in der Nähe des Zentrums einen lipophoben Block, umfassend einen hohen Anteil an einer oder mehreren ethylenisch ungesättigten Esterverbindungen der Formel (II) und/oder weiteren Comonomeren gemäß Gruppe (IV), und einen lipophoben Block, der von dispergierenden Monomeren (III) abgeleitet ist, in der Nähe des Endes des Armes aufweist.

15. Verfahren zur Herstellung von Sternpolymeren, umfassend 50-100 Gew.-%, bezogen auf das Gewicht des Polymeren, Wiederholungseinheiten, die von einer oder mehreren ethylenisch ungesättigten Esterverbindungen der Formel (I) 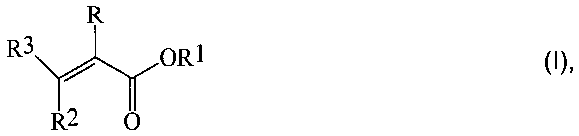 worin R Wasserstoff oder Methyl darstellt, R¹ einen linearen oder verzweigten Alkylrest mit 7 bis 30 Kohlenstoffatomen bedeutet, R² und R³ unabhängig Wasserstoff oder eine Gruppe der Formel -COOR' darstellen, worin R' Wasserstoff oder eine Alkylgruppe mit 7 bis 30 Kohlenstoffatomen bedeutet, abgeleitet sind, wobei das Polymer ein Sternpolymer mit 3 bis 21 Armen ist und mindestens 3 der Arme mindestens 40 Gew.-%, bezogen auf das Gewicht der Arme, Wiederholungseinheiten umfassen, die von einer oder mehreren ethylenisch ungesättigten Esterverbindungen der Formel (I) 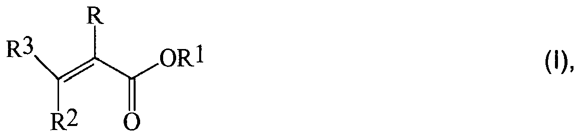 worin R Wasserstoff oder Methyl darstellt, R¹ einen linearen oder verzweigten Alkylrest mit 7 bis 30 Kohlenstoffatomen bedeutet, R² und R³ unabhängig Wasserstoff oder eine Gruppe der Formel -COOR' darstellen, worin R' Wasserstoff oder eine Alkylgruppe mit 7 bis 30 Kohlenstoffatomen bedeutet, abgeleitet sind, dass das Polymer durch kontrollierte Polymerisation ausgehend von einem multifunktionellen Initiator hergestellt wird, wobei die Anzahl der Polymerarme von der Anzahl der Funktionen, die der Initiator aufweist, abhängig ist und das Zentrum höchstens 50, bevorzugt höchstens 25 Kohlenstoffatome aufweist, die Polydispersität M_{w}/Mₙ des Sternpolymeren im Bereich von 1,0 bis 2,0 liegt und dass die Polymerisation in Gegenwart eines Öles und/oder unpolaren Lösungsmittels durchgeführt wird.

16. Ölformulierung enthaltend Sternpolymere, die gemäß Anspruch 15 herstellbar sind.

17. Ölformulierung gemäß Anspruch 16, **dadurch gekennzeichnet, dass** die Ölformulierung 1 bis 25 Gew.% Sternpolymere, die gemäß Anspruch 15 herstellbar sind, umfasst.

18. Ölformulierung gemäß den Ansprüchen 16 und 17, **dadurch gekennzeichnet, dass** der PSSI nach ASTM D5621 (40m in Ultraschall) kleiner oder gleich 25 ist und/oder nach DIN 51350, Teil 6 (20h Kegelrollenlager) kleiner oder gleich 50 ist.

19. Ölformulierung gemäß mindestens einem der Ansprüche 16 bis 18,
**dadurch gekennzeichnet, dass** der Viskositätsindex im Bereich von 0 bis 300 liegt.

20. Ölformulierung gemäß mindestens einem der Ansprüche 16 bis 19,
**dadurch gekennzeichnet, dass** die Ölformulierung eine Schmierölformulierung ist und diese Basisöle der API Gruppe I, II, III, IV und/oder Gruppe V enthält.

21. Schmierölformulierung gemäß Anspruch 20, **dadurch gekennzeichnet, dass** die Schmierölformulierung mindestens ein zusätzliches Additiv umfasst, das keine Sternpolymer gemäß den Ansprüchen 1 bis 14 darstellt.

22. Schmierölformulierung gemäß Anspruch 21, **dadurch gekennzeichnet, dass** das Additiv auf einem linearen Polyalkyl(meth)acrylat mit 1 bis 30 Kohlenstoffatomen in der Alkoholgruppe basiert.

23. Verwendung von Sternpolymeren gemäß mindestens einem der vorhergehenden Ansprüche 1 bis 14 als Viskositätsveränderer, Stockpunktverbesserer, Dispergiermittel und/oder Reibveränderer.

## Claims

1. Polymer comprising 50-100% by weight, based on the weight of the polymer, of repeat units which are derived from one or more ethylenically unsaturated ester compounds of the formula (I) 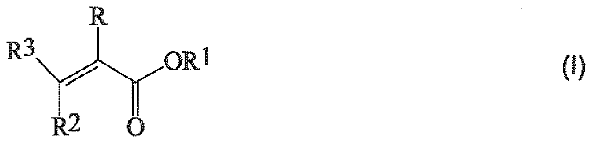 in which R is hydrogen or methyl, R¹ is a linear or branched alkyl radical having from 7 to 30 carbon atoms, R² and R³ are each independently hydrogen or a group of the formula -COOR' in which R' is hydrogen or an alkyl group having from 7 to 30 carbon atoms,
**characterized in that** the polymer is a star polymer having from 3 to 21 arms and at least 3 of the arms comprise at least 40% by weight, based on the weight of the arms, of repeat units which derive from one or more ethylenically unsaturated ester compounds of the formula (I) 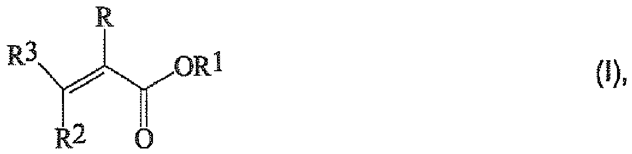 in which R is hydrogen or methyl, R¹ is a linear or branched alkyl radical having from 7 to 30 carbon atoms, R² and R³ are each independently hydrogen or a group of the formula -COOR' in which R' is hydrogen or an alkyl group having from 7 to 30 carbon atoms, and **in that** the polymer is prepared by controlled polymerization proceeding from a polyfunctional initiator, the number of polymer arms depending on the number of functions that the initiator has, and the centre having at most 50, preferably at most 25 carbon atoms, and **in that** the polydispersity M_{w}/Mₙ of the star polymer is in the range from 1.0 to 2.0.

2. Polymer according to Claim 1, **characterized in that** the polymer has a filterability of at least 90%, based on a projected filterability (stage 1) to ISO 13357-2.

3. Polymer according to at least one of the preceding claims, **characterized in that** the star polymer has from 5 to 12 arms.

4. Polymer according to at least one of the preceding claims, **characterized in that** the star polymer has a weight-average molecular weight M_{w} in the range from 25 000 to 150 000 g/mol and a polydispersity M_{w}/Mₙ in the range from 1.0 to 1.3.

5. Polymer according to at least one of the preceding claims, **characterized in that** the polymer has from 0.1 to 40% by weight of repeat units which are derived from one or more ethylenically unsaturated ester compounds of the formula (II) 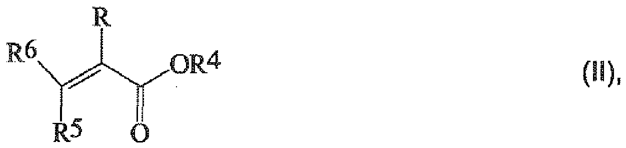 in which R is hydrogen or methyl, R⁴ is a linear or branched alkyl radical having from 1 to 6 carbon atoms, R⁵ and R⁶ are each independently hydrogen or a group of the formula -COOR" in which R" is hydrogen or an alkyl group having from 1 to 6 carbon atoms.

6. Polymer according to at least one of the preceding claims, **characterized in that** the polymer has up to 30% by weight of repeat units which are derived from dispersing monomers (III), and **in that** the dispersing monomer is a dispersing (meth)acrylate based on an alcohol R⁷-OH or a (meth)acrylamide based on an amine R⁷-NR⁸-H, **in that** R⁷ is independently a group which comprises at most 10 carbon atoms and has at least one heteroatom and **in that** R⁸ is independently hydrogen or a group having from 1 to 20 carbon atoms.

7. Polymer according to Claim 6, **characterized in that** the R⁷ radical comprises at least one group of the formula -OR⁸ or -NR⁸R⁸, in which the R⁸ radicals are each independently hydrogen or a group having from 1 to 20 carbon atoms.

8. Polymer according to at least one of the preceding claims, **characterized in that** the star polymer has at least two blocks.

9. Polymer according to Claim 8, **characterized in that** the star polymer has at least one lipophilic and one lipophobic block.

10. Polymer according to Claim 9, **characterized in that** at least one lipophobic block has at least 50% by weight, based on the weight of the block, of repeat units which are derived from one or more ethylenically unsaturated ester compounds of the formula (II), dispersing monomers (III) and/or further comonomers according to group (IV).

11. Polymer according to Claim 9 or 10, **characterized in that** the polymer, within a lipophobic block, displays lipophobic segments having an integer segment length greater than or equal to 3.

12. Polymer according to at least one of Claims 9 to 11, **characterized in that** the lipophobic block is arranged close to the centre of a viscosity index-increasing star polymer.

13. Polymer according to at least one of Claims 9 to 11, **characterized in that** the lipophobic block is arranged close to the end of the arm of a viscosity index-decreasing star polymer.

14. Polymer according to Claim 12 and 13, **characterized in that** the polymer is arranged close to the centre of a lipophobic block comprising a high proportion of one or more ethylenically unsaturated ester compounds of the formula (II) and/or further comonomers of group (IV), and a lipophobic block which is derived from dispersing monomers (III) close to the end of the arm.

15. Process for preparing star polymers comprising 50-100% by weight, based on the weight of the polymer, of repeat units which are derived from one or more ethylenically unsaturated ester compounds of the formula (I) 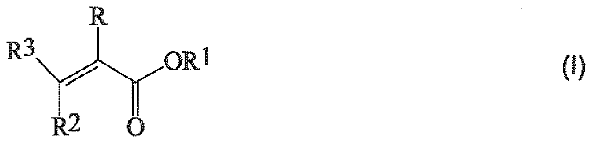 in which R is hydrogen or methyl, R¹ is a linear or branched alkyl radical having from 7 to 30 carbon atoms, R² and R³ are each independently hydrogen or a group of the formula -COOR' in which R' is hydrogen or an alkyl group having from 7 to 30 carbon atoms, the polymer being a star polymer having from 3 to 21 arms and at least 3 of the arms comprising at least 40% by weight, based on the weight of the arms, of repeat units which derive from one or more ethylenically unsaturated ester compounds of the formula (I) 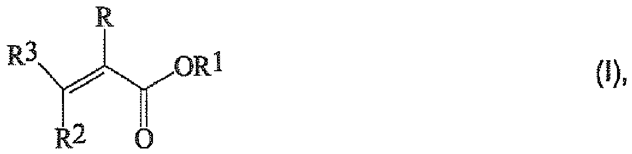 in which R is hydrogen or methyl, R¹ is a linear or branched alkyl radical having from 7 to 30 carbon atoms, R² and R³ are each independently hydrogen or a group of the formula -COOR' in which R' is hydrogen or an alkyl group having from 7 to 30 carbon atoms, in that the polymer is prepared by controlled polymerization proceeding from a polyfunctional initiator, the number of polymer arms depending on the number of functions that the initiator has, and the centre having at most 50, preferably at most 25 carbon atoms, the polydispersity M_{w}/Mₙ of the star polymer is in the range from 1.0 to 2.0 and in that the polymerization is performed in the presence of an oil and/or nonpolar solvent.

16. Oil formulation comprising star polymers preparable according to Claim 15.

17. Oil formulation according to Claim 16, **characterized in that** the oil formulation comprises from 1 to 25% by weight of star polymers preparable according to Claim 15.

18. Oil formulation according to Claims 16 and 17, **characterized in that** the PSSI to ASTM D5621 (ultrasound for 40 min) is less than or equal to 25 and/or to DIN 51350 part 6 (20 h, tapered roller bearing) is less than or equal to 50.

19. Oil formulation according to at least one of Claims 16 to 18, **characterized in that** the viscosity index is within the range from 0 to 300.

20. Oil formulation according to at least one of Claims 16 to 19, **characterized in that** the oil formulation is a lubricant oil formulation and said formulation contains base oils of API group I, II, III, IV and/or group V.

21. Lubricant oil formulation according to Claim 20, **characterized in that** the lubricant oil formulation comprises at least one additional additive which is not a star polymer according to Claims 1 to 14.

22. Lubricant oil formulation according to Claim 21, **characterized in that** the additive is based on a linear polyalkyl (meth)acrylate having from 1 to 30 carbon atoms in the alcohol group.

23. Use of star polymers according to at least one of the preceding Claims 1 to 14 as viscosity modifiers, pour point improvers, dispersants and/or friction modifiers.

## Revendications

1. Polymère comprenant 50-100% en poids, par rapport au poids du polymère, d'unités récurrentes qui sont dérivées d'un ou de plusieurs composés ester éthyléniquement insaturés de formule (I) 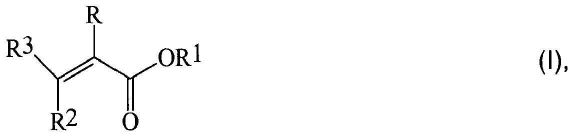 où R représente hydrogène ou méthyle, R¹ signifie un radical alkyle linéaire ou ramifié comprenant 7 à 30 atomes de carbone, R² et R³ représentent, indépendamment, hydrogène ou un groupe de formule -COOR', R' représentant hydrogène ou un groupe alkyle comprenant 7 à 30 atomes de carbone,
**caractérisé en ce que** le polymère est un polymère en étoile présentant 3 à 21 bras et au moins 3 des bras comprenant au moins 40% en poids, par rapport au poids des bras, d'unités récurrentes qui sont dérivées d'un ou de plusieurs composés ester éthyléniquement insaturés de formule (I) 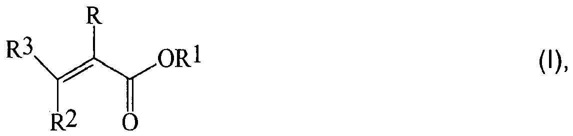 où R représente hydrogène ou méthyle, R¹ signifie un radical alkyle linéaire ou ramifié comprenant 7 à 30 atomes de carbone, R² et R³ représentent, indépendamment, hydrogène ou un groupe de formule -COOR', R' représentant hydrogène ou un groupe alkyle comprenant 7 à 30 atomes de carbone, et **en ce que** le polymère est préparé par polymérisation contrôlée partant d'un initiateur polyfonctionnel, le nombre de bras du polymère dépendant du nombre de fonctions que l'initiateur présente et le centre présentant au plus 50, de préférence au plus 25 atomes de carbone, et **en ce que** la polydispersité M_{w}/Mₙ du polymère en étoile se situe dans la plage de 1,0 à 2,0.

2. Polymère selon la revendication 1, **caractérisé en ce que** le polymère présente une filtrabilité d'au moins 90%, par rapport à une filtrabilité projetée (étape 1) selon la norme ISO 13357-2.

3. Polymère selon au moins l'une quelconque des revendications précédentes, **caractérisé en ce que** le polymère en étoile présente 5 à 12 bras.

4. Polymère selon au moins l'une quelconque des revendications précédentes, **caractérisé en ce que** le polymère en étoile présente une moyenne pondérale du poids moléculaire M_{w} dans la plage de 25 000 à 150 000 g/mole et une polydispersité M_{w}/Mₙ dans la plage de 1,0 à 1, 3.

5. Polymère selon au moins l'une quelconque des revendications précédentes, **caractérisé en ce que** le polymère présente 0,1 à 40% en poids d'unités récurrentes qui sont dérivées d'un ou de plusieurs composés ester éthyléniquement insaturés de formule (II) 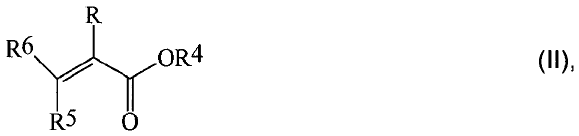 où R représente hydrogène ou méthyle, R⁴ signifie un radical alkyle linéaire ou ramifié comprenant 1 à 6 atomes de carbone, R⁵ et R⁶ représentent, indépendamment, hydrogène ou un groupe de formule -COOR", R" représentant hydrogène ou un groupe alkyle comprenant 1 à 6 atomes de carbone.

6. Polymère selon au moins l'une quelconque des revendications précédentes, **caractérisé en ce que** le polymère présente jusqu'à 30% en poids d'unités récurrentes qui sont dérivées de monomères dispersants (III) et **en ce que** le monomère dispersant est un (méth)acrylate dispersant à base d'un alcool R⁷-OH ou un (méth)acrylamide à base d'une amine R⁷-NR⁸-H, **en ce que** R⁷ représente, indépendamment, un groupe comprenant au plus 10 atomes de carbone présentant au moins un hétéroatome et **en ce que** R⁸ représente, indépendamment, hydrogène ou un groupe comprenant 1 à 20 atomes de carbone.

7. Polymère selon la revendication 6, **caractérisé en ce que** le radical R⁷ comprend au moins un groupe de formule -OR⁸ ou -NR⁸R⁸, les radicaux R⁸ représentant indépendamment hydrogène ou un groupe comprenant 1 à 20 atomes de carbone.

8. Polymère selon au moins l'une quelconque des revendications précédentes, **caractérisé en ce que** le polymère en étoile présente au moins deux blocs.

9. Polymère selon la revendication 8, **caractérisé en ce que** le polymère en étoile présente au moins un bloc lipophile et un bloc lipophobe.

10. Polymère selon la revendication 9, **caractérisé en ce qu'**au moins un bloc lipophobe présente au moins 50% en poids, par rapport au poids du bloc, d'unités récurrentes, qui sont dérivées d'un ou de plusieurs composés ester éthyléniquement insaturés de formule (II), de monomères dispersants (III) et/ou d'autres comonomères selon le groupe (IV).

11. Polymère selon la revendication 9 ou 10, **caractérisé en ce que** le polymère présente, au sein d'un bloc lipophobe, des segments lipophobes présentant une longueur, exprimée par un nombre entier, de segment supérieure ou égale à 3.

12. Polymère selon au moins l'une quelconque des revendications 9 à 11, **caractérisé en ce que** le bloc lipophobe est disposé à proximité du centre d'un polymère en étoile augmentant l'indice de viscosité.

13. Polymère selon au moins l'une quelconque des revendications 9 à 11, **caractérisé en ce que** le bloc lipophobe est disposé à proximité de l'extrémité du bras d'un polymère en étoile abaissant l'indice de viscosité.

14. Polymère selon la revendication 12 et 13, **caractérisé en ce que** le polymère présente, à proximité du centre, un bloc lipophobe, comprenant une proportion élevée d'un ou de plusieurs composés ester éthyléniquement insaturés de formule (II) et/ou d'autres comonomères selon le groupe (IV), et un bloc lipophobe, qui est dérivé de monomères dispersants (III), à proximité de l'extrémité du bras.

15. Procédé pour la préparation de polymères en étoile, comprenant 50-100% en poids, par rapport au poids du polymère, d'unités récurrentes qui sont dérivées d'un ou de plusieurs composés ester éthyléniquement insaturés de formule (I) 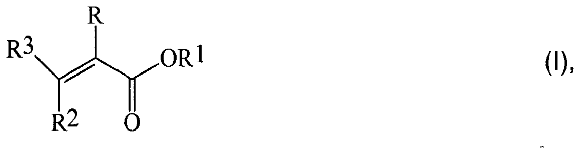 où R représente hydrogène ou méthyle, R¹ signifie un radical alkyle linéaire ou ramifié comprenant 7 à 30 atomes de carbone, R² et R³ représentent, indépendamment, hydrogène ou un groupe de formule -COOR', R' représentant hydrogène ou un groupe alkyle comprenant 7 à 30 atomes de carbone, le polymère étant un polymère en étoile comprenant 3 à 21 bras et au moins 3 des bras comprenant au moins 40% en poids, par rapport au poids des bras, d'unités récurrentes qui sont dérivées d'un ou de plusieurs composés ester éthyléniquement insaturés de formule (I) 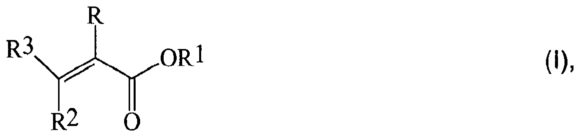 où R représente hydrogène ou méthyle, R¹ signifie un radical alkyle linéaire ou ramifié comprenant 7 à 30 atomes de carbone, R² et R³ représentent, indépendamment, hydrogène ou un groupe de formule -COOR', R' représentant hydrogène ou un groupe alkyle comprenant 7 à 30 atomes de carbone, en ce que le polymère est préparé par polymérisation contrôlée partant d'un initiateur polyfonctionnel, le nombre de bras du polymère dépendant du nombre de fonctions que l'initiateur présente et le centre présentant au plus 50, de préférence au plus 25 atomes de carbone, la polydispersité M_{w}/Mₙ du polymère en étoile se situe dans la plage de 1,0 à 2,0 et en ce que la polymérisation est réalisée en présence d'une huile et/ou d'un solvant non polaire.

16. Formulation d'huile contenant des polymères en étoile qui peuvent être préparés selon la revendication 15.

17. Formulation d'huile selon la revendication 16, **caractérisée en ce que** la formulation d'huile comprend 1 à 25% en poids de polymères en étoile qui peuvent être préparés selon la revendication 15.

18. Formulation d'huile selon les revendications 16 et 17, **caractérisée en ce que** le PSSI (permanent shear stability index - indice de stabilité au cisaillement permanent) selon la norme ASTM D5621 (ultrasons 40 min) est inférieur ou égal à 25 et/ou, selon la norme DIN 51350, partie 6 (roulement à billes conique 20 h) inférieur ou égal à 50.

19. Formulation d'huile selon au moins l'une quelconque des revendications 16 à 18, **caractérisée en ce que** l'indice de viscosité se situe dans la plage de 0 à 300.

20. Formulation d'huile selon au moins l'une quelconque des revendications 16 à 19, **caractérisée en ce que** la formulation d'huile est une formulation d'huile lubrifiante et celle-ci contient des huiles de base du groupe API I, II, III, IV et/ou V.

21. Formulation d'huile lubrifiante selon la revendication 20, **caractérisée en ce que** la formulation d'huile lubrifiante comprend au moins un additif supplémentaire qui ne représente pas un polymère en étoile selon les revendications 1 à 14.

22. Formulation d'huile lubrifiante selon la revendication 21, **caractérisée en ce que** l'additif est à base d'un poly((méth)acrylate d'alkyle) linéaire comprenant 1 à 30 atomes de carbone dans le groupe alcool.

23. Utilisation de polymères en étoile selon au moins l'une quelconque des revendications précédentes 1 à 14 comme agent de modification de la viscosité, agent d'amélioration du point de figeage, dispersant et/ou agent de modification de la friction.
